(19) **Europäisches Patentamt**
**European Patent Office**
**Office européen des brevets**

(11) **EP 3 082 185 A1**

(12) **EUROPEAN PATENT APPLICATION**
published in accordance with Art. 153(4) EPC

(43) Date of publication:
**19.10.2016 Bulletin 2016/42**

(51) Int Cl.:
**H01M 8/02** *(2006.01)* **H01M 8/10** *(2006.01)*

(21) Application number: **15772963.3**

(22) Date of filing: **02.04.2015**

(86) International application number:
**PCT/JP2015/060489**

(87) International publication number:
**WO 2015/152379 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.04.2014 JP 2014077320**

(71) Applicant: **Nippon Steel & Sumitomo Metal Corporation**
**Tokyo 100-8071 (JP)**

(72) Inventors:
• **KAGAWA, Taku**
**Tokyo 100-8071 (JP)**

• **TAKAHASHI, Kazuhiro**
**Tokyo 100-8071 (JP)**
• **IIJIMA, Takashi**
**Tokyo 100-8071 (JP)**
• **KIMOTO, Masanari**
**Tokyo 100-8071 (JP)**
• **IMAMURA, Junko**
**Tokyo 100-8071 (JP)**
• **TOKUNO, Kiyonori**
**Tokyo 100-8071 (JP)**
• **KURODA, Atsuhiko**
**Tokyo 100-8071 (JP)**

(74) Representative: **Vossius & Partner**
**Patentanwälte Rechtsanwälte mbB**
**Siebertstrasse 3**
**81675 München (DE)**

(54) **COMPOSITE METAL FOIL FOR FUEL CELL SEPARATOR, FUEL CELL SEPARATOR, FUEL CELL, AND METHOD FOR PRODUCING COMPOSITE METAL FOIL FOR FUEL CELL SEPARATOR**

(57) A composite metal foil in which the surface of a titanium foil or a titanium alloy foil is coated with an electrically conductive layer; in the composite metal foil, an electrically conductive film in which TiO is dispersed in an oxide film and the TiO composition ratio $[I_{TiO}/(I_{Ti}+I_{TiO})]$ found from the maximum intensity of the diffraction peaks of TiO ($I_{TiO}$) and the maximum intensity of the diffraction peaks of metal titanium ($I_{Ti}$) out of the X-ray diffraction peaks of the surface of the titanium foil or the titanium alloy foil is 0.5% or more is formed on the surface of the titanium foil or the titanium alloy foil, and the electrically conductive layer consists of, in mass%, silver particles with an average particle size of not less than 10 nm and not more than 500 nm: 20% to 90%, a dispersant: 0.2% to 1.0%, and the balance: an acrylic resin or an epoxy resin, and has a thickness of 5 to 50 $\mu$m.

EP 3 082 185 A1

**Description**

Technical Field

The present invention relates to a composite metal foil used for a low-contact-resistance polymer electrolyte fuel cell separator used for automobiles using electric power as the drive source, electricity generating systems, etc., a fuel cell separator produced by processing the composite metal foil, a fuel cell using the fuel cell separator, and a method for producing a composite metal foil for a fuel cell separator.

Background Art

These days, the development of polymer electrolyte fuel cells, as fuel cells for automobiles, is progressing rapidly. The polymer electrolyte fuel cell is a fuel cell in which hydrogen (fuel) and oxygen are used and an organic substance film of a hydrogen-ion-selective permeability type is used as the electrolyte. As the hydrogen, hydrogen obtained by the reforming of alcohols etc. is used as well as pure hydrogen.

The polymer electrolyte fuel cell is formed by stacking, in multiple layers, a structure in which separators push both sides of a unit in which a polymer electrolyte film, an electrode, and a gas diffusion layer are integrated (a membrane electrode assembly, hereinafter occasionally referred to as an "MEA").

The properties required for the separator are to have good electron conductivity, good isolation properties between the oxygen and the hydrogen of both electrodes, low contact resistance with the MEA, good durability in the environment in the fuel cell, etc. The gas diffusion layer (GDL) of the MEA is generally made of carbon paper in which carbon fibers are integrated, and hence it is desired for the separator to have good contact-to-carbon electrical conductivity.

Examples of the separator include a carbon separator and a metal separator; the carbon separator is the mainstream, but the metal separator has better strength and ductility than the carbon separator, and can be mass-produced because gas passages (protrusions and trenches) can be formed by press processing without causing cracking on the material for the metal separator.

Furthermore, the metal separator allows the fuel cell to be compactified; hence, for the mass production and spread of the fuel cell, it is essential that a metal separator having good contact-to-carbon electrical conductivity be put to practical use.

Stainless steel and titanium are known as the material for the metal separator, but they have a large contact resistance to carbon as they are, and hence many technologies to reduce the contact resistance are proposed (e.g. see Patent Literatures 1 to 18).

The technologies proposed in Patent Literatures 1 to 18 enhance the electrical conductivity of the material itself for the metal separator to reduce the contact resistance to carbon; on the other hand, in Patent Literature 19, a fuel cell separator in which a synthetic resin layer with an electrically conductive agent mixed therein is formed on at least one surface of a metal substrate and an electrically conductive filler is sunk under the surface of the synthetic resin layer is disclosed.

In the fuel cell separator of Patent Literature 19, the electrically conductive filler is sunk under the surface of the synthetic resin layer and then gas passages are formed by press processing; but the synthetic resin layer is a component provided between adjacent single cells in a fuel cell composed of a plurality of single cells stacked, and is not a component provided inside the cell of the fuel cell, which side is prone to corrosion.

In Patent Literature 19, although a description is given up to the contact resistance of the separator coated with the synthetic resin layer, the corrosion resistance to the solution in the cell of the fuel cell is not described; and in the actual use, the electrical conductivity may be reduced due to corrosion, and the long-term corrosion resistance may be poor.

Patent Literature 20 discloses a fuel cell separator including a surface-treated layer having electrical conductivity and corrosion resistance which is produced by, using the inkjet method with an ultrafine inkjet apparatus, discharging a solution containing an electrically conductive metal ultrafine particle paste onto the surface of the base material of the separator and thus forming a coating surface and then performing annealing.

In the fuel cell separator of Patent Literature 20, an electrically conductive surface-treated layer can be provided selectively in any part of a concave-convex separator; but a method for producing the base material of the separator is not disclosed in Patent Literature 20; in general, even when an electrically conductive surface-treated layer is formed on the surface of a separator base material with small electrical conductivity, it is very difficult to produce a separator having characteristics of good electrical conductivity, and in addition, the area not coated with the surface-treated layer may be corroded by direct contact with the solution in the cell of the fuel cell, and the electrical conductivity of the separator may be reduced.

In Patent Literature 21, a method for producing a fuel cell is disclosed which includes an application step in which a thermosetting resin paste containing an electrically conductive material is applied to an electrically conductive plate for a separator, a processing step in which the electrically conductive plate for a separator coated with the thermosetting resin paste is processed into a concave-convex form, an assembly step in which a plurality of single-cell preformed bodies in each of which the electrically conductive plate for a separator processed in a concave-convex form is placed individually on both surfaces of a membrane-electrode joined body are stacked to assemble a stacked preformed body, and a joining step in which the stacked preformed body is heated to cure and join the thermosetting resin.

Patent Literature 21 attempts to perform the joining necessary during stack assembly by using not solder, which is likely to be deteriorated in the usage environment, but a thermosetting resin paste having corrosion resistance; and describes neither a method for preparing the base material nor the electrical conductivity.

For the metal separator for the polymer electrolyte fuel cell, it is necessary to have long-term corrosion resistance by which the metal separator can endure in the internal environment of the fuel cell over a long period of time.

Patent Literatures 22, 23, 24, 25 and 26 discloses that a minute amount of fluorine is dissolved out and a hydrogen fluoride environment is produced when a fluorine-based polymer electrolyte is used for the electrolyte film. Further, in Patent Literature 26, it is disclosed that the pH of the discharged liquid is made approximately 3 experimentally.

In Patent Literature 27, it is disclosed that the temperature of the corrosion test is 80 to 100°C. Further, in Patent Literatures 23 and 26, it is disclosed that the corrosion resistance is evaluated with an aqueous solution at 80°C in which fluorine is dissolved.

On the other hand, regarding the environment resistance of titanium, it is known that titanium is dissolved in a hydrogen fluoride aqueous solution (hydrofluoric acid). Non-Patent Literature 1 discloses that the color change of titanium is promoted when fluorine is added at approximately 2 ppm or approximately 20 ppm to a sulfuric acid aqueous solution at pH 3. Further, in Patent Literature 28, it is disclosed that the amount of fluorine in the aqueous solution is set to 50 ppm.

The color change phenomenon of titanium is a phenomenon in which interference colors occur as a result of the fact that titanium is dissolved and reprecipitated as an oxide on the surface and an oxide film has grown. Since the reprecipitated oxide inhibits the contact electrical conductivity, the environment in which fluorine is dissolved out in the solid fuel cell is a more severe environment to titanium. Thus, in the solid fuel cell, it is necessary to further enhance the durability of the separator in order not to increase the contact resistance.

In Patent Literature 29, a stainless steel material for a separator of a polymer electrolyte fuel cell including a stainless steel base material, an oxide film provided on the surface of the stainless steel base material, an electrically conductive layer containing a non-metallic electrically conductive substance (graphitic carbon) provided on the surface of the oxide film, and an electrically conductive substance (a boride-based metal inclusion) penetrating through the oxide film and electrically connected to the stainless steel base material and the electrically conductive layer is disclosed.

In the case where a stainless steel material is used as a fuel cell separator, usually the separator is plated with Au in order to maintain corrosion resistance; but in Patent Literature 29, it is disclosed that corrosion resistance equivalent to Au plating is obtained also by using inexpensive graphitic carbon and a binder for cost reduction.

However, in Patent Literature 29, neither what kind of substance is effective as the resin-based binder for the application of graphitic carbon nor what kind of characteristics are needed as the resin-based binder for the application to the metal separator for a fuel cell is described.

In Patent Literature 29, it is described that the binder is preferably one containing at least one of polyvinylidene fluoride (PVDF) and polytetrafluoroethylene (PTFE), but only preferred two kinds are described as Examples.

In Patent Literature 30, it is described that repeated load fatigue is added to the surface of the metal separator and the surface of the gas diffusion layer due to the thermal expansion and contraction of the fuel cell caused by electricity generation repetition.

In Patent Literature 31, a fuel cell separator in which an electrically conductive film is formed on the surface of a metal base is described. In this Patent Literature 31, there is a description of TiO being contained as a titanium oxide of the surface of a titanium base material; but simply the natural oxide coating of the titanium surface is thinned by nitrohydrofluoric acid pickling, and therefore the amount of TiO is not sufficient: and a reference to the surface roughness is not seen.

Citation List

Patent Literature

Patent Literature 1: JP 2000-328200A
Patent Literature 2: JP 2004-273370A
Patent Literature 3: JP 2007-131947A
Patent Literature 4: JP 2007-005084A

Patent Literature 5: JP 2006-140095A
Patent Literature 6: JP 2007-234244A
Patent Literature 7: JP 2010-097840A
Patent Literature 8: JP 2010-129458A
Patent Literature 9: JP 2010-248570A
Patent Literature 10: JP 2010-248572A
Patent Literature 11: JP 2012-028045A
Patent Literature 12: JP 2012-028046A
Patent Literature 13: JP 2012-043775A
Patent Literature 14: JP 2012-043776A
Patent Literature 15: JP 2012-028047A
Patent Literature 16: JP 2011-077018A
Patent Literature 17: WO 2010/038544
Patent Literature 18: WO 2011/016465
Patent Literature 19: JP 2002-343375A
Patent Literature 20: JP 2005-004998A
Patent Literature 21: JP 2007-157387A
Patent Literature 22: JP 2005-209399A
Patent Literature 23: JP 2005-056776A
Patent Literature 24: JP 2005-038823A
Patent Literature 25: JP 2010-108673A
Patent Literature 26: JP 2009-238560A
Patent Literature 27: JP 2006-156288A
Patent Literature 28: JP 2010-182558A
Patent Literature 29: JP 2010-140886A
Patent Literature 30: JP 2006-134640A
Patent Literature 31: JP 2010-27262A

Non-Patent Literature

Non-Patent Literature 1: Ti-2003 Science and Technology, G. Lutjering and J. Albrecht, Wiley-VCH Verlag GmbH & Co., Hamburg, 2004, pp. 3117-3124

Summary of Invention

Technical Problem

Based on the description of Patent Literature 29 of the binder being preferably one containing at least one of polyvinylidene fluoride (PVDF) and polytetrafluoroethylene (PTFE), the present inventors conducted a verification experiment in which PVDF and graphitic carbon were mixed together and PTFE and graphitic carbon were mixed together, each of the mixtures was applied to a stainless steel foil that forms a separator, and the corrosion resistance in an environment containing a high concentration of fluoride ions was investigated.

As a result, the following have been found: (i) it is not easy for PVDF and PTFE to be uniformly mixed with graphitic carbon, and (ii) the stainless steel foil coated with the mixture of PVDF and graphitic carbon or the mixture of PTFE and graphitic carbon corrodes in the environment containing a high concentration of fluoride ions and there is a serious problem with the durability of the fuel cell separator.

During the use of the fuel cell, an electrolyte film that is a constituent material of the fuel cell is deteriorated and fluoride ions are dissolved out; hence, the corrosion resistance of the separator to a minute amount of fluoride ions is very important as the durability of the fuel cell. In addition, an improvement in the durability of the separator to the repeated load fatigue that occurs on the surface of the metal separator and the surface of the gas diffusion layer due to the thermal expansion and contraction of the fuel cell caused by electricity generation repetition is required.

Thus, an issue of the present invention is to enhance the corrosion resistance to fluoride ions and the resistance to load fatigue of the fuel cell separator, and an object of the present invention is to provide a metal foil for a fuel cell separator with low contact resistance which solves the issue. Furthermore, an object of the present invention is to provide a fuel cell separator produced by processing the metal foil, a fuel cell using the fuel cell separator, and a method for producing a composite metal foil for a fuel cell separator.

Solution to Problem

The present inventors, on the precondition that a coating agent in which a carbonaceous powder and a resin are mixed is used as a coating agent to be applied to a metal separator for a fuel cell, investigated the combination of a carbonaceous powder and various resins. As a result, it has been found that a coating agent made of a carbonaceous powder and a fluorine-based resin does not exhibit sufficient corrosion resistance in an environment in which fluoride ions are present.

It is known that a fluorine-based resin exhibits sufficient chemical resistance in an environment in which fluoride ions are present around, and a bath and a jig of a fluorine-based resin are used in the fluorine-based solution treatment of a semiconductor. Thus, the present inventors investigated the reason why the coating agent of the combination of a carbonaceous powder and a fluorine-based resin does not exhibit sufficient corrosion resistance for the underlying stainless steel foil, and have presumed it as follows.

The affinity between the surface of the carbonaceous powder and the fluorine-based resin will not be good, and therefore it will be difficult to apply the mixture of the carbonaceous powder and the fluorine-based resin to the surface of the stainless steel foil in a mixture state where both are completely familiar with each other. Furthermore, the adhesiveness between the fluorine-based resin and the metal base material will usually be low.

Therefore, even when the mixture of the carbonaceous powder and the fluorine-based resin is applied as an electrically conductive resin to the surface of the stainless steel foil, a solution having a low pH or containing fluoride ions will pass through the electrically conductive resin layer and reach the underlying stainless steel foil via a portion where the carbonaceous powder and the fluorine-based resin are not familiar (repulsive portion), and corrosion will proceed.

Some measure is necessary for, not only separators of stainless steel foil, metal separators to be placed in a corrosive environment of an aqueous solution containing fluoride ions. Thus, the present inventors have thought up the idea that, when a foil of titanium, which has better corrosion resistance than stainless steel, is used as the base material of the separator, the durability of the separator will be improved.

A titanium foil maintains durability by means of an oxide film of its surface, but the oxide film has insulating properties and the electrical conductivity of the titanium foil is low.

However, as a result of extensive studies, the present inventors have found out the following: (i) when a titanium foil is treated under needed conditions, TiO is produced and dispersed in an oxide film and an electrically conductive film is formed on the surface of the titanium foil, and (ii) when a mixture in which a material having affinity with titanium (e.g. a silver powder and a resin) is mixed is applied onto the electrically conductive film to form an electrically conductive layer, the durability of the separator made of titanium to a low-pH solution and a solution containing fluoride ions is improved.

It has also been found that, preferably by distributing minute protrusions densely on the titanium surface, the adhesiveness between the titanium foil and the electrically conductive layer can be improved, and the resistance to the load fatigue that occurs in an environment of the thermal expansion and contraction of the fuel cell caused by electricity generation repetition can be enhanced.

The present invention has been made on the basis of the above findings, and its summary is as follows.

[1] A composite metal foil for a fuel cell separator in which a surface of a titanium foil or a titanium alloy foil is coated with an electrically conductive layer, wherein

(i) an electrically conductive film in which TiO is dispersed in an oxide film and the TiO composition ratio [$I_{TiO}/(I_{Ti} + I_{TiO})$] found from the maximum intensity of the diffraction peaks of TiO ($I_{TiO}$) and the maximum intensity of the diffraction peaks of metal titanium ($I_{Ti}$) out of the X-ray diffraction peaks of the surface of the titanium foil or the titanium alloy foil is 0.5% or more is formed on the surface of the titanium foil or the titanium alloy foil, and
(ii) the electrically conductive layer consists of, in mass%,

(ii-1) silver particles with an average particle size of not less than 10 nm and not more than 500 nm: 20% to 90%,
(ii-2) a dispersant: 0.2% to 1.0%, and
(ii-3) the balance: an acrylic resin or an epoxy resin, and
(ii-4) has a thickness of 5 to 50 $\mu$m.

[2] The composite metal foil for a fuel cell separator according to [1], wherein minute protrusions are densely distributed on the surface of the titanium foil or the titanium alloy foil and a surface roughness RSm of the surface is 0.5 to 5.0 $\mu$m.

[3] The composite metal foil for a fuel cell separator according to [1] or [2], wherein a surface roughness Ra of the surface is 0.05 to 0.50 $\mu$m.

[4] The composite metal foil for a fuel cell separator according to any one of [1] to [3], wherein the dispersant contains a carboxyl group.

[5] The composite metal foil for a fuel cell separator according to [4], wherein the dispersant containing a carboxyl group is made of a fatty acid of at least one of Chemical Formulae (a) and (b) below,

(a) a saturated fatty acid of $C_nH_{2n}O_2$ (the number of carbon atoms n: 10 to 20), and
(b) an unsaturated fatty acid of $C_nH_{2(n-m)}O_2$ (the number of carbon atoms n: 10 to 20, the number of double bonds of carbon m: 1 to 3).

[6] A method for producing the composite metal foil for a fuel cell separator according to any one of [1] to [5], the method including:

(i) subjecting a titanium foil or a titanium alloy foil to an immersion treatment in which the titanium foil or the titanium alloy foil is immersed in a non-oxidizing acid or to cathodic electrolysis treatment, and then to heat treatment, and thereby forming, on a surface of the titanium foil or the titanium alloy foil, an electrically conductive film in which TiO is dispersed in an oxide film and the TiO composition ratio $[I_{TiO}/(I_{Ti} + I_{TiO})]$ found from the maximum intensity of the diffraction peaks of TiO ($I_{TiO}$) and the maximum intensity of the diffraction peaks of metal titanium ($I_{Ti}$) out of the X-ray diffraction peaks of the surface of the titanium foil or the titanium alloy foil is 0.5% or more; and subsequently
(ii) applying to the electrically conductive film an electrically conductive coating material consisting of, in mass%,

(ii-1) silver particles with an average particle size of not less than 10 nm and not more than 500 nm: 20% to 90%,
(ii-2) a dispersant: 0.2% to 1.0%, and
(ii-3) the balance: an acrylic resin or an epoxy resin, and
performing drying, and
(ii-4) thereby forming an electrically conductive layer with a thickness of 5 to 50 $\mu$m.

[7] The method for producing the composite metal foil for a fuel cell separator according to [6], wherein minute protrusions are densely distributed on the surface of the titanium foil or the titanium alloy foil and a surface roughness RSm of the surface is 0.5 to 5.0 $\mu$m.

[8] The method for producing the composite metal foil for a fuel cell separator according to [6] or [7], wherein a surface roughness Ra of the surface is 0.05 to 0.50 $\mu$m.

[9] The method for producing the composite metal foil for a fuel cell separator according to any one of [6] to [8], wherein the dispersant contains a carboxyl group.

[10] The method for producing the composite metal foil for a fuel cell separator according to [9], wherein the dispersant containing a carboxyl group is made of a fatty acid of at least one of Chemical Formulae (a) and (b) below,

(a) a saturated fatty acid of $C_nH_{2n}O_2$ (the number of carbon atoms n: 10 to 20), and
(b) an unsaturated fatty acid of $C_nH_{2(n-m)}O_2$ (the number of carbon atoms n: 10 to 20, the number of double bonds of carbon m: 1 to 3).

[11] A fuel cell separator including the composite metal foil for a fuel cell separator according to any one of [1] to [5] as a base material.

[12] A fuel cell including the fuel cell separator according to [11].

Advantageous Effects of Invention

According to the present invention, a composite metal foil for a fuel cell separator having good corrosion resistance to fluoride ions and low contact resistance, a fuel cell separator produced by processing the metal foil, a fuel cell using the fuel cell separator, and a method for producing a composite metal foil for a fuel cell separator can be provided. Furthermore, the adhesiveness between the titanium foil and the electrically conductive layer can be improved, and the resistance to the load fatigue that occurs in an environment of the thermal expansion and contraction of the fuel cell caused by electricity generation repetition can be enhanced.

Description of Embodiments

A composite metal foil for a fuel cell separator of the present invention (hereinafter occasionally referred to as "the present invention metal foil") is a composite metal foil in which the surface of a titanium foil or a titanium alloy foil is coated with an electrically conductive layer, and in the composite metal foil, (i) an electrically conductive film in which TiO is dispersed in an oxide film and the TiO composition ratio $[I_{TiO}/(I_{Ti} + I_{TiO})]$ found from the maximum intensity of the diffraction peaks of TiO ($I_{TiO}$) and the maximum intensity of the diffraction peaks of metal titanium ($I_{Ti}$) out of the X-ray diffraction peaks of the surface of the titanium foil or the titanium alloy foil is 0.5% or more is formed on the surface of the titanium foil or the titanium alloy foil, and

(ii) the electrically conductive layer mentioned above consists of, in mass%,

(ii-1) silver particles with an average particle size of not less than 10 nm and not more than 500 nm: 20% to 90%,
(ii-2) a dispersant: 0.2% to 1.0%, and
(ii-3) the balance: an acrylic resin or an epoxy resin, and
(ii-4) has a thickness of 5 to 50 $\mu$m.

The present invention metal foil will now be described.

The titanium or the titanium alloy used as the base material in the present invention metal foil (hereinafter occasionally referred to as a "titanium base material") is not limited to a titanium or a titanium alloy with a specific composition or specific characteristics. However, since there is a case where the titanium base material is processed into a separator having concave-convex gas passages, the titanium base material preferably has good processability.

Usually an oxide film of a passive film is formed on the surface of the foil of the titanium or the titanium alloy (titanium base material) (hereinafter occasionally referred to as a "titanium base foil"). The oxide film has insulating properties, but TiO is produced and dispersed in the oxide film by performing a needed treatment on the surface of the titanium base foil.

Although usually an insulating oxide film is formed on the surface of the titanium base foil as described above, the present inventors have prepared an electrically conductive titanium base foil by performing a needed treatment on the surface of the titanium base material to disperse TiO in the oxide film and thus forming an electrically conductive film.

The method for dispersing TiO in the oxide film of the surface of the titanium base foil is not particularly limited to a specific method. For example, the titanium base material is subjected to a treatment of (x) immersion in hydrochloric acid or sulfuric acid, which is a non-oxidizing acid, or (y) cathodic electrolysis, and is further subjected to a needed heat treatment; thus, the surface of the titanium base foil is made into a surface with which a diffraction peak of TiO can be detected in X-ray diffraction measured at an incident angle of 0.15 to 3°.

When the titanium base foil is subjected to the treatment of (x) immersion in hydrochloric acid or sulfuric acid, which is a non-oxidizing acid, or (y) cathodic electrolysis, a titanium hydride is produced on the surface of the titanium base foil. Although the titanium hydride is oxidized by the oxygen in the atmosphere during the subsequent heat treatment, it is presumed that the oxidation is suppressed by the hydrogen that the titanium hydride possesses and the titanium hydride remains stably in the state of TiO before reaching $TiO_2$, which has small electrical conductivity.

Titanium oxide is improved in electrical conductivity when it is deficient in oxygen relative to the stoichiometric composition, like TiO. By the dispersion of TiO having high electrical conductivity in the oxide film of the surface of the titanium base foil, the electrical conductivity of the oxide film (electrically conductive film) is improved.

Thus, the surface of the titanium base foil is coated with an oxide film with high electrical conductivity, that is, an electrically conductive film. In the electrically conductive film, it is preferable that the TiO composition ratio $[I_{TiO}/(I_{Ti} + I_{TiO})]$ satisfy the following formula.

$$[I_{TiO}/(I_{Ti} + I_{TiO})] \geq 0.5\%$$

$I_{TiO}$ : the maximum intensity of the X-ray diffraction peaks of TiO
$I_{Ti}$: the maximum intensity of the X-ray diffraction peaks of metal Ti

The TiO composition ratio $[I_{TiO}/(I_{Ti} + I_{TiO})]$ is an index that indicates the composition ratio of TiO at the surface of the titanium base foil. The index indicates that a larger value of the composition ratio corresponds to the electrically conductive film being a film structure containing a larger amount of TiO. Hence, the TiO composition ratio is limited to 0.5% or more in the formula mentioned above. It is preferably 2.0% or more in terms of ensuring electrical conductivity stably.

The TiO composition ratio $[T_{TiO}/(I_{Ti} + I_{TiO})]$ mentioned above is preferably higher and the upper limit is not particularly limited, and 10% is obtained.

When a separator produced with the titanium base foil including the electrically conductive film (hereinafter occasionally referred to as a "titanium base separator") is used in an aqueous solution containing a high concentration of fluoride ions, it is presumed that the electrically conductive film is dissolved and consequently the characteristics necessary over a long period of time of the fuel cell are worsened.

The present inventors investigated the durability of the titanium base separator including the electrically conductive film by immersing it in an aqueous solution containing a high concentration of fluoride ions. As a result, it has been found that an environment containing fluoride ions influences the durability of the titanium base separator.

Thus, the present inventors have attempted to form, on the electrically conductive film, a coating layer that protects the electrically conductive film of the surface of the titanium base separator, and conducted a study regarding the material of the coating layer that has an effect equivalent to gold plating and is economically advantageous.

As noble metals with little chemical change, silver, copper, and the like are given. Silver has a cost of approximately 1/60 of those of gold and platinum and is relatively inexpensive. Copper has high reactivity as compared with silver, and is therefore not preferable as the material that maintains long-term durability.

A measure of performing silver plating on the electrically conductive film of the titanium base separator was investigated, but the aqueous solution containing a high concentration of fluoride ions may enter from a plating failure portion and the titanium base material may be deteriorated; hence, a measure of coating the electrically conductive film of the titanium base separator with an electrically conductive coating material that is compatible with and has adhesiveness to the titanium base material and contains silver was investigated.

The electrically conductive coating material is a material in which prescribed amounts of silver particles, a resin, a dispersant, and a solvent are blended; when this is applied to the surface of the titanium base foil (the electrically conductive film) and dried, an electrically conductive layer is formed.

As the resin to be blended in the electrically conductive coating material, a melamine resin, an acrylic resin, a polyurethane resin, an epoxy resin, an unsaturated polyester resin, and a vinyl chloride resin are given. The resin needs to have good adhesiveness to the silver particle and the titanium base foil as a matter of course, and furthermore needs to not be deteriorated at the driving temperature of the fuel cell (around 80°C), or in a low-pH sulfuric acid solution containing fluoride ions.

The present inventors conducted a study on resins that are less likely to be deteriorated in the temperature environment and the solution environment mentioned above. For example, a vinyl chloride resin has a heat-resistant temperature of 60 to 80°C, which is lower than the driving temperature of the fuel cell, and therefore cannot be used. Further, an unsaturated polyester resin and a polyurethane resin may hydrolyze in a high-temperature, low-pH sulfuric acid solution, and therefore cannot be used.

The present inventors investigated various resins for whether or not they satisfy the condition of being less likely to be deteriorated in the temperature environment and the solution environment mentioned above. As a result, it has been found out that an acrylic-based resin and an epoxy-based resin satisfy the condition mentioned above in the end.

The electrically conductive layer may crack due to shock or vibration if it is too hard; hence, the molecular weight of the resin used is preferably 10,000 to 50,000, and the hardness of the electrically conductive layer (the hardness after the electrically conductive coating material is dried) is preferably H to 2H in terms of pencil hardness.

For the silver particles to be mixed in the resin, particles of a size of approximately 1 μm were used at the beginning, but electrical conductivity was not able to be ensured stably. The cause is presumed to be that the fluidity of the electrically conductive coating material was reduced and the distribution of silver in the electrically conductive layer was made non-uniform, and consequently the contact between silver particles and between the silver particle and the surface of the titanium base foil was made poor.

To maintain the electrical conductivity of the titanium base separator stably, it is necessary to increase the amount of silver blended. However, if the amount of silver blended is increased, the electrically conductive coating material cannot be applied onto the titanium base separator uniformly, and a microscopic defect like a pinhole occurs in the electrically conductive layer. It has been found that, when the titanium base separator is placed in an environment containing fluoride ions, fluoride ions enter the defect of the electrically conductive layer and easily come into contact with the electrically conductive film, and consequently the titanium base foil is corroded.

To apply the electrically conductive coating material uniformly to the surface of the titanium base foil, it is necessary to increase the amount of silver blended while maintaining the fluidity of the electrically conductive coating material. By the present inventors' investigation, it has been found that the electrically conductive coating material can be uniformly applied when silver particles of 10 to 500 nm are blended at 20 to 90 mass% in the electrically conductive coating material.

If the particle size is smaller than 10 nm, it is presumed that contact failure between silver particles occurs and the contact electrical conductivity is worsened. Further, if the amount of silver particles blended is larger than 90 mass%, the fluidity of the electrically conductive coating material is reduced, hence the surface of the titanium base foil cannot be uniformly coated and a microscopic defect like a pinhole occurs in the electrically conductive layer, and fluoride ions enter the defect and come into contact with the titanium base foil; consequently, the contact electrical conductivity is worsened. If the amount of silver particles blended is smaller than 20 mass%, the contact between silver particles is difficult, and the contact electrical conductivity is worsened.

To disperse silver particles in a low-polarity solvent, it is necessary to cause a dispersant to be adsorbed on the surface of the silver particle and disperse silver particles while causing silver particles to repel each other by the steric hindrance of the dispersant.

The present inventors have thought up the idea that a saturated fatty acid (including one having a carbon branch) or an unsaturated fatty acid having a carboxylic acid group which has both a polar portion and a non-polar portion, has a wide range of molecular weights, and is relatively easily available is most suitable as the dispersant. As a result of an investigation, it has been found that a saturated fatty acid or an unsaturated fatty acid of a carboxylic acid having 10 to 20 carbon atoms is most suitable.

In the case of a dispersant with a small molecular weight having 9 or less carbon atoms, the repulsion between silver particles by steric hindrance is less likely to occur; on the other hand, in the case of a dispersant with a large molecular weight having 21 or more carbon atoms, it is presumed that the dispersant cannot enter the space between silver particles, or that the dispersant adsorbed on the silver particle forms a cross-link between silver particles and the dispersion of silver is made poor. The present inventors have obtained experimental results that support the thought of the present inventors.

That is, the dispersant containing a carboxyl group is preferably made of a fatty acid of at least one of Chemical Formulae (a) and (b) bellow.

(a) a saturated fatty acid of $C_nH_{2n}O_2$ (the number of carbon atoms n: 10 to 20)
(b) an unsaturated fatty acid of $C_nH_{2(n-m)}O_2$ (the number of carbon atoms n: 10 to 20, the number of double bonds of carbon m: 1 to 3)

The amount of the dispersant blended in the electrically conductive coating material depends on the amount of silver particles, and is preferably 0.2 to 1.0 mass% relative to 20 to 90 mass% of silver particles. If the amount of the dispersant blended is too small, specifically less than 0.2 mass%, silver particles aggregate and the dispersion is made non-uniform, and the electrical conductivity of the electrically conductive layer is reduced. On the other hand, if the amount of the dispersant blended is as large as more than 1.0 mass%, contact failure between silver particles occurs, and the electrical conductivity of the electrically conductive layer is reduced after all.

The thickness of the electrically conductive layer needs to be 5 to 50 $\mu$m. If the thickness is less than 5 $\mu$m, it is highly likely that a microscopic defect like a pinhole will occur in the electrically conductive layer, and the low-pH solution containing fluoride ions will enter the defect of the electrically conductive layer and reach the electrically conductive film; consequently, the corrosion resistance of the titanium base separator will be reduced. On the other hand, if the thickness is more than 50 $\mu$m and a thick film is produced, the dispersion of silver particles in the electrically conductive layer is made non-uniform, and the electrical conductivity is reduced.

Further, when the electrically conductive layer is applied to the relatively smooth surface of the titanium foil, there arises a problem that peeling is likely to occur at the interface between the electrically conductive layer and the titanium foil in an environment in which repeated load fatigue is added to the surface of the metal separator and the surface of the gas diffusion layer due to the thermal expansion and contraction of the fuel cell caused by electricity generation repetition.

Thus, it is important to improve the adhesiveness between the titanium foil and the electrically conductive layer; the adhesiveness depends on the roughness of the titanium surface. It is preferable that the surface roughness RSm of titanium be 0.5 to 5.0 $\mu$m, and the Ra be 0.05 to 0.50 $\mu$m.

If the RSm, which indicates the average length of curve elements, is larger than 5.0 $\mu$m, the surface is nearly smooth, and therefore the surface area is reduced and the adhesiveness is reduced. On the other hand, there has been practically no RSm obtained which is less than 0.5 $\mu$m. Further, if the Ra is smaller than 0.05 $\mu$m, the surface area is reduced and the adhesiveness is worsened. On the other hand, there has been practically no Ra obtained which is more than 0.50 $\mu$m. As a result of these investigations, when the surface roughness RSm of titanium is 0.5 to 5.0 $\mu$m and the Ra is 0.05 to 0.50 $\mu$m, the adhesion area between the electrically conductive layer and the surface of the titanium foil can be ensured and the adhesiveness can be improved.

A description will now be given with comparison between (a) the case where the electrically conductive layer is not attached and (b) the case where the electrically conductive layer is attached.

In the case (a) where the electrically conductive layer is not attached, the surface of the titanium base foil is in direct contact with the gas diffusion layer. Due to the thermal expansion and contraction of the fuel cell caused by electricity generation repetition, repeated load fatigue occurs between the surface of the metal separator and the surface of the gas diffusion layer. In the separator in which the electrically conductive layer is not formed, even when the contact resistance in the early period of use is less than 10 m$\Omega \cdot$cm$^2$. it exceeds 10 m$\Omega \cdot$cm$^2$ when load fluctuation is performed 5 times.

In the case (b) where the electrically conductive layer is attached, the electrically conductive layer exists between the titanium base foil and the gas diffusion layer, and the surface of the titanium base foil and the gas diffusion layer are not in direct contact. Thus, the electrically conductive layer containing silver particles protects the surface of the titanium base foil with regard to the repeated load fatigue that occurs on the surface of the titanium base foil and the surface of the gas diffusion layer due to the thermal expansion and contraction of the fuel cell. Thereby, the durability of the separator can be improved. In the separator in which the electrically conductive layer is formed, there is no change in the contact resistance even when load fluctuation is performed. The Rsm (the average distance between adjacent convexities) is 0.5 to 5.0 $\mu$m, and the Ra (the average height of concavities and convexities) is 0.05 to 0.50 $\mu$m. By setting the particle size of the silver particle to 10 nm to 500 nm, which is larger than the height of concavities and convexities of the titanium surface (Ra), the repeated load fatigue that occurs due to the contact of the gas diffusion layer with the surface of the titanium base foil can be suppressed.

The electrically conductive coating material that forms the electrically conductive layer is prepared in the following manner, and is applied to the electrically conductive film of the titanium base foil.

(1) Preparation of the electrically conductive coating material

Prescribed amounts of a solvent (e.g. toluene) and a dispersant (e.g. oleic acid) are put into a 100 ml screw vial, and stirring is performed with a stirrer to dissolve the dispersant. A prescribed amount of silver particles are blended in the solution, and kneading is performed for 12 hours with a tumbling mill. After the kneading, a resin (e.g. an acrylic resin, ACRYDIC 52-204, produced by DIC Corporation) is blended, and stirring is performed with a stirring rod.

(2) Application of the electrically conductive coating material

The electrically conductive coating material is dropped onto the titanium base foil with a dropper, and coating is performed with a bar coater. By drying after the coating, an electrically conductive layer is formed.

The performance of the present invention metal foil is evaluated by an accelerated deterioration test. The accelerated deterioration test will now be described.

(1) Preparation of the titanium base foil having the electrically conductive film on its surface

A titanium base foil is (x) immersed in hydrochloric acid or sulfuric acid, which is a non-oxidizing acid, under prescribed conditions or (y) cathodically electrolyzed under prescribed conditions, and is then heated at a prescribed temperature.

(2) Preparation of the titanium base foil for a separator having the electrically conductive layer on its outermost surface

In the manner described above, prescribed amounts of a solvent (toluene) and a dispersant (e.g. oleic acid) are put into a 100 ml screw vial, and stirring is performed with a stirrer to dissolve the dispersant. A prescribed amount of silver particles are blended in the solution, and kneading is performed for 12 hours with a tumbling mill.

After the kneading, a resin (e.g. an acrylic resin, ACRYDIC 52-204, produced by DIC Corporation) is blended, and stirring is performed with a stirring rod to prepare an electrically conductive coating material. The electrically conductive coating material is dropped onto the titanium base foil with a dropper, and coating is performed with a bar coater. After the coating, drying is performed to form an electrically conductive layer on the surface of the titanium base foil; thus, a titanium base foil for a separator is prepared.

(3) Evaluation of the adhesiveness

The adhesiveness between the titanium foil and the electrically conductive layer was evaluated by a perpendicular tensile test in which an iron plate that was stuck to the sample with an adhesive was pulled in the perpendicular direction.

(4) Accelerated deterioration test

A test piece (approximately 30 mm $\times$ 50 mm) was taken from the titanium base foil for a separator prepared by (2) above, and the test piece was immersed for 4 days in a sulfuric acid aqueous solution at 80°C and pH 3 containing 100 ppm fluoride ions; thus, an accelerated deterioration test was performed.

Specifically, a sulfuric acid aqueous solution at pH 3 containing 100 ppm fluoride ions was put into a plastic container (approximately 38 mm in inner diameter × 75 mm in height), the plastic container was kept in a constant-temperature water bath capable of keeping 80°C, the test piece mentioned above was immersed for 4 days in the sulfuric acid aqueous solution in the plastic container, and after the immersion the contact resistance (unit: $m\Omega \cdot cm^2$) was measured. The contact resistance was measured for the same test piece also before the accelerated deterioration test.

For the contact resistance, carbon paper as a reference and the test piece were stacked, the resulting piece was sandwiched by two metal fittings made of gold-plated copper at a prescribed pressure, a direct current (unit: A) of the same value as the contact area value between the test piece and the carbon paper (unit: $cm^2$) was passed between the two metal fittings made of gold-plated copper, and the voltage drop (unit: $m\Omega \cdot cm^2$) occurring at the connections between the metal fitting made of gold-plated copper, the carbon paper, and the test piece was measured.

The durability of the titanium base foil for a separator can be evaluated by whether or not the contact resistances before and after the accelerated deterioration test are not more than the target value.

[Examples]

Next, Examples of the present invention are described, but the conditions in Examples are only condition examples employed to assess the feasibility and effect of the present invention, and the present invention is not limited to these condition examples. The present invention may employ various conditions to the extent that they do not depart from the spirit of the present invention and they achieve the object of the present invention.

(Example)

To assess the structure and characteristics of the present invention metal foil, titanium base foils with an electrically conductive film formed on their surface or titanium base foils without an electrically conductive film formed were prepared while various conditions of the titanium base material, the pre-treatment, the surface treatment, and the heating treatment were changed in wide ranges, and an electrically conductive coating material made of a solvent, a dispersant, an electrically conductive metal powder, and a resin was applied to one side of each of these titanium base foils; thus, titanium base foils for a separator of various forms (test foils) were produced on an experimental basis. Specific details thereof are shown in Table 1 to Table 13. A detailed description will now be given.

(1) Preparation of titanium base foils with or without an electrically conductive film formed on their surface

[Titanium base material]

The titanium base material is as follows.
M00: Stainless steel of Material 1 of JP 2010-140886A (Patent Literature 29)
M01: a titanium (JIS H 4600 type 1 TP270C); an industrial pure titanium, type 1
M02: a titanium (JIS H 4600 type 2 TP340C); an industrial pure titanium, type 2
M03: a titanium alloy (JIS H 4600 type 61); Al (2.5 to 3.5 mass%)-V (2 to 3 mass%)-Ti
M04: a titanium alloy (JIS H 4600 type 16); Ta (4 to 6 mass%)-Ti
M05: a titanium alloy (JIS H 4600 type 17); Pd (0.04 to 0.08 mass%)-Ti
M06: a titanium alloy (JIS H 4600 type 19); Pd (0.04 to 0.08 mass%)-Co (0.2 to 0.8 mass%)-Ti
M07: a titanium alloy (JIS H 4600 type 21); Ru (0.04 to 0.06 mass%)-Ni (0.4 to 0.6 mass%)-Ti

[Pre-treatment]

The pre-treatment of the titanium base material is as follows.
P01: perform cold rolling up to a thickness of 0.1 mm, perform alkaline cleaning, then perform bright annealing at 800°C for 20 seconds in an Ar atmosphere
P02: perform cold rolling up to a thickness of 0.1 mm, perform alkaline cleaning, and then perform bright annealing at 800°C for 20 seconds in an Ar atmosphere, and then clean the surface by pickling with nitrohydrofluoric acid

In the surface cleaning with nitrohydrofluoric acid of P02, immersion was performed at 45°C for 1 minute in an aqueous solution containing 3.5 mass% hydrogen fluoride (HF) and 4.5 mass% nitric acid ($HNO_3$). The portion extending

approximately 5 $\mu$m in depth from the surface was dissolved.

[Surface treatment]

> H01: a 30 mass%-concentration hydrochloric acid aqueous solution
> H02: cathodic electrolysis at a current density of 1 mA/cm$^2$ in a hydrochloric acid solution at pH 2 containing 30 g/L sodium chloride

The electrolysis of H02 used platinum as the counter electrode.

[Heating treatment]

> K01: heating treatment in a heating furnace in the air atmosphere

The heating temperature was changed in the range of 200 to 650°C, and the heating time in the range of 3 to 7 minutes.

(2) Measurement of [$I_{TiO}/(I_{Ti} + I_{TiO})$]

An X-ray diffraction profile was measured by oblique incidence in which the incident angle of X-ray is fixed to 0.3° with respect to the surface of the titanium base foil, and the diffraction peaks thereof were identified.
In the present invention alloy foil, the intensities of the X-ray diffraction peaks of the surface of the titanium base foil satisfy the following formula.

$$[I_{TiO}/(I_{Ti} + I_{TiO})] \geq 0.5\%$$

> $I_{TiO}$ : the maximum intensity of the X-ray diffraction peaks of TiO
> $I_{Ti}$: the maximum intensity of the X-ray diffraction peaks of metal Ti

[$I_{TiO}/(I_{Ti} + T_{TiO})$] is an index that indicates the composition ratio of TiO at the surface of the titanium base foil, and indicates that a larger value of the composition ratio corresponds to the electrically conductive film of the titanium base foil containing a larger amount of TiO.
For X-ray diffraction, using SmartLab, an X-ray diffraction apparatus manufactured by Rigaku Corporation, Co-K$\alpha$ (wavelength: $\lambda$ = 1.7902 Å) was used for the target at an incident angle of 0.3°. A W/Si multiple-layer film mirror (on the incident side) was used for the K$\beta$ removal. The X-ray source load power (tube voltage/tube current) is 9.0 kW (45 kV/200 mA).
The analysis software application used is X'pert HighScore Plus produced by Spectris Co., Ltd. The measured X-ray diffraction profile can be compared to a database in which TiO of ICDD Card No.01-072-4593 or 01-086-2352 is used as the reference material; thereby, the diffraction peaks can be identified.
The depth of X-ray entry in the measurement conditions mentioned above is approximately 0.2 $\mu$m for metal titanium and approximately 0.3 $\mu$m for the titanium hydride, and therefore the X-ray diffraction peaks are X-ray diffraction peaks that reflect the structure extending approximately 0.2 to 0.3 $\mu$m in depth from the surface of the titanium base foil.

(3) Measurement of the surface roughness

For the surface roughnesses RSm and Ra, the surface of the titanium base material was measured based on JIS B 0601-2001 using a color 3D laser microscope VK-8700 (manufactured by Keyence Corporation). In the measurement, the Ra was measured by a planar measurement in which a measuring area of 23.53 $\times$ 17.64 $\mu$m was observed at a magnification of 2000x using an objective lens magnification of 100x. and the RSm was measured by a linear measurement. The $\lambda$s profile filter was set to 0.8 $\mu$m, and the $\lambda$c profile filter to 0.08 mm. The repeatability $\sigma$ of the apparatus mentioned above is 0.03 $\mu$m for both the planar measurement and the linear measurement, and the display resolution is 0.01 $\mu$m for both height and width.

(4) Preparation of electrically conductive coating materials

[Preparation of silver particles]

Silver particles with a particle size of 10 nm were prepared in the following manner.

In a plastic container, 5 g of silver nitrate and 5 g of L-cysteine were dissolved in 1000 ml of ultrapure water. A 10 mg/L sodium borohydride solution was dropped onto the solution being stirred, the dropping was stopped at the time when the solution changed in color, and stirring was performed for approximately 10 minutes in the same condition. The solution was centrifuged at 14,000 rpm for 15 minutes with a centrifugal separator (himac CS150NX, manufactured by Hitachi Koki Co., Ltd.,), and the precipitate was dispersed in ethanol and recovered.

Silver particles with a particle size of 5 nm were prepared in the following manner.

In a plastic container, 5 g of silver nitrate and 5 g of oleic acid were dissolved in 1000 ml of ultrapure water. A 10 mg/L sodium borohydride solution was dropped onto the solution being stirred, the dropping was stopped at the time when the solution changed in color, and stirring was performed for approximately 10 minutes in the same condition. The solution was centrifuged at 14,000 rpm for 15 minutes with a centrifugal separator (himac CS150NX, manufactured by Hitachi Koki Co., Ltd.,), and the precipitate was dispersed in ethanol and recovered.

As silver particles with particle sizes of 1000 nm and 500 nm, silver-3500S and silver-3500SS produced by Osaki Industry Co.,Ltd. were used, respectively: as silver particles with a particle size of 200 nm, a silver powder produced by K.K. Shinko Kagaku Kogyosho was used; and as silver particles with a particle size of 55 nm, a silver powder (product number: 49524-60) produced by Kanto Chemical Co..Inc. was used.

[Measurement of the silver particles]

The particle size of the silver particles with particle sizes of 50 nm or more was measured by the laser diffraction method using a nanoparticle size distribution measuring apparatus (SALD-7100H, manufactured by Shimadzu Corporation). The value of D50 (cumulative 50 mass% particle size) was taken as the average particle size.

The silver particles with particle sizes of 5 nm and 10 nm were measured in the following manner.

First, 2 mass% of silver particles were added to a mixed solution of 96 mass% cyclohexane and 2 mass% oleic acid, and were dispersed by ultrasonic waves. The dispersion solution was dropped onto a Cu microgrid equipped with a support film and drying was performed, and thereby a sample for TEM observation was prepared. The sample was observed using a transmission electron microscope (JEM-2100F, manufactured by JEOL Ltd.), and an image photographed at 300,000x was analyzed using Image-J (free software application); thus, the average particle size of approximately 500 to 1000 silver particles was measured.

[Preparation of electrically conductive coating materials]

Prescribed amounts of a solvent (toluene), a dispersant, and silver particles with a prescribed particle size were put into a 100 ml screw vial, and kneading was performed at 400 rpm for 12 hours with a ball mill (type: V-2M; manufactured by Irie Shokai Co., Ltd.). After the kneading, a resin (acrylic, epoxy, or vinyl chloride) was added, and stirring was performed with a stirring rod; thus, an electrically conductive coating material was prepared.

The electrically conductive coating material was dropped onto the titanium base foil with a dropper, and coating was performed with a bar coater (manufactured by Matsuo Sangyo Co., Ltd.). After the coating, drying was performed; thus, a titanium base foil having an electrically conductive layer on its surface was prepared. Toluene was used as the solvent.

ACRYDIC 52-204 produced by DIC Corporation was used as the acrylic resin, EPICLON 850 produced by DIC Corporation was used as the epoxy resin, and SOLBIN-M5 produced by Nissin Chemical Industry Co., Ltd. was used as the vinyl chloride resin.

As the dispersant, dodecylbenzenesulfonic acid, pelargonic acid, behenic acid, capric acid, stearic acid, arachidic acid, oleic acid, eicosenoic acid, linolenic acid, and arachidonic acid produced by Kanto Chemical Co.,Inc. were used.

The film thickness of the electrically conductive layer was measured with a micrometer (MDC-25MJ, manufactured by Mitutoyo Corporation), and was found by subtracting the thickness of the titanium base foil from the thickness of the titanium base foil with the electrically conductive coating material applied to its surface.

Evaluation of the adhesiveness

A grid-like cut with a spacing of 2 mm was made in the titanium base foil sample in which the electrically conductive layer was formed on the surface of the titanium foil, and the front side of an iron plate with a copper wire with a wire diameter of 0.9 mm soldered on its back side was stuck to the squares of the grid with an adhesive having good tensile bond strength (Aron Alpha Extra 4000). The sample was fixed to a jig of an apparatus, and the copper wire was pulled at a rate of 1 mm/minute in the direction perpendicular to the sample; thus, the adhesiveness was evaluated. The expansion and contraction range of the fuel cell is generally made approximately 20%; in view of this, on the assumption that the thickness of one cell is 1.5 mm, the tensile evaluation is made by checking whether or not peeling occurs at the interface between the titanium foil and the electrically conductive layer at a displacement of 0.3 mm. The evaluation was performed in the following manner.

Good: peeling did not occur at the interface between the titanium foil and the electrically conductive layer
Poor: peeling occurred at the interface between the titanium foil and the electrically conductive layer

[Accelerated deterioration test]

The accelerated deterioration test was performed by immersing the titanium base foil sample produced on an experimental basis for 4 days in a sulfuric acid aqueous solution at 80°C and pH 3 containing 100 ppm fluoride ions.
Specifically, a sulfuric acid aqueous solution at pH 3 containing 100 ppm fluoride ions was put into a plastic container (approximately 38 mm in inner diameter $\times$ 75 mm in height), the container was kept in a constant-temperature water bath capable of keeping 80°C, the test piece (approximately 30 mm $\times$ 50 mm) was immersed for 4 days in the sulfuric acid aqueous solution in the plastic container, and after the immersion the contact resistance (unit: $m\Omega \cdot cm^2$) was measured. The contact resistance was measured for the same test piece also before the accelerated deterioration test.
For the contact resistance, carbon paper (TGP-H-120, produced by Toray Industries, Inc.) and the test piece were stacked, the resulting piece was sandwiched by two metal fittings made of gold-plated copper at a surface pressure of 10 kgf/cm$^2$, a direct current (unit: A) of the same value as the contact area value between the test piece and the carbon paper (unit: cm$^2$) was passed between the two metal fittings made of gold-plated copper, and the voltage drop (unit: $m\Omega \cdot cm^2$) occurring at the connections between the metal fitting made of gold-plated copper, the carbon paper, and the test piece was measured. For the load fatigue resistance test, after the contact resistance was measured in the above manner, the load of a surface pressure of 20 kgf/cm$^2$ was applied 5 times repeatedly in the same condition, and then the surface pressure was turned back to the surface pressure of 10 kgf/cm$^2$ and the contact resistance was measured again.
The accelerated deterioration test is performed by immersion for 4 days in a sulfuric acid solution at 80°C and pH 3 containing 100 ppm fluoride ions. The evaluations of before and after the accelerated deterioration test and of the load fatigue resistance test were performed in the following manner.
Very good: less than 10 m$\Omega$cm$^2$ ; Good: 10 to 15 m$\Omega$cm$^2$ ; Poor: larger than 15 m$\Omega$cm$^2$
The results of the above are shown in the line of "Contact electrical conductivity" of Tables 1 to 13.
In Table 1. Table 2 (continuation of Table 1), and Table (continuation of Table 2), Examples in cases where a titanium base foil satisfying $[I_{TiO}/(I_{Ti} + I_{TiO})] \geq 0.5\%$ in thin-film XRD measurement is used and in cases where a titanium base foil not satisfying the formula is used and Examples in cases where the surface roughnesses Rsm and Ra of the titanium foil fall within the ranges of 0.5 to 5.0 $\mu$m and 0.05 to 0.5 $\mu$m, respectively, and in cases of not falling within the ranges are shown.
[Table 1]

Table 1

| Implementation No. | | | 1-1 | 1-2 | 1-3 | 1-4 | 1-5 | 1-6 | 1-7 | 1-8 | 1-9 | 1-10 |
|---|---|---|---|---|---|---|---|---|---|---|---|---|
| | | | Comparative Example | Comparative Example | Comparative Example | Comparative Example | Comparative Example | Comparative Example | Present Invention Example | Present Invention Example | Present Invention Example | Comparative Example |
| Titanium foil | Base material | | M00 | M01 | M01 | M01 | M01 | M01 | M01 | M01 | M01 | M01 |
| | Treatment | Pre-treatment | - | P01 | P01 | P01 | P01 | P01 | P01 | P01 | P01 | P01 |
| | | Surface treatment | - | - | - | H01 | H01 | H01 | H01 | H01 | H02 | - |
| | | Treatment temperature (°C) | - | - | - | 80 | 80 | 70 | 70 | 60 | 35 | - |
| | | Treatment time (min) | - | - | - | 25 | 25 | 30 | 30 | 40 | 20 | - |
| | | Heating treatment | - | - | - | K01 | K01 | K01 | K01 | K01 | K01 | - |
| | | Treatment temperature (°C) | - | - | - | 650 | 650 | 330 | 330 | 270 | 330 | - |
| | | Treatment time (min) | - | - | - | 3 | 3 | 5 | 5 | 7 | 7 | - |
| | Thin-film XRD measurement | $(I_{TiO}/(I_{Ti}+I_{TiO})]$ (%) | - | 0 | 0 | 0.4 | 0.4 | 6 | 6 | 0.6 | 5.8 | 0 |
| | | | - | (-) | (-) | (-) | (-) | | | | | (-) |
| | Titanium surface roughness | Rsm($\mu$m) | | 7.4 | 7.7 | 3.5 | 3.5 | 4.5 | 4.4 | 4.8 | 3.5 | 7.5 |
| | | Ra($\mu$m) | | <0.01 | <0.01 | 0.49 | 0.48 | 0.50 | 0.49 | 0.45 | 0.05 | <0.01 |
| | Titanium foil contact resistance (m$\Omega$·cm$^2$) | | - | 20 | 20 | 16 | 16 | 5 | 5 | 9 | 5 | 40 |

| Implementation No. | | | 1-1 | 1-2 | 1-3 | 1-4 | 1-5 | 1-6 | 1-7 | 1-8 | 1-9 | 1-10 |
|---|---|---|---|---|---|---|---|---|---|---|---|---|
| | | | Comparative Example | Comparative Example | Comparative Example | Comparative Example | Comparative Example | Comparative Example | Present Invention Example | Present Invention Example | Present Invention Example | Comparative Example |
| Coating material | Solvent | Type | NMP | - | Toluene | - | Toluene | - | Toluene | Toluene | Toluene | - |
| | | Content ratio (mass%) | 80 | - | 46.0 | - | 46.0 | - | 46.0 | 46.0 | 46.0 | - |
| | Dispersant | Type | - | - | Oleic acid | - | Oleic acid | - | Oleic acid | Oleic acid | Oleic acid | - |
| | | Number of carbon atoms n | | - | 18 | - | 18 | | 18 | 18 | 18 | - |
| | | Number of double bonds of carbon m | | - | 1 | - | 1 | | 1 | 1 | 1 | - |
| | | Content ratio (mass%) | - | - | 0.5 | - | 0.5 | - | 0.5 | 0.5 | 0.5 | - |
| | Electrically conductive powder | Type | Graphite and carbon black 6000 (graphite) Graphite 14.4 Carbon black 3.6 | - | Ag | - | Ag | - | Ag | Ag | Ag | - |
| | | Particle size (D50) (nm) | | - | 55 | - | 55 | - | 55 | 55 | 55 | - |
| | | Content ratio (mass%) | | - | 50 | - | 50 | - | 50 | 50 | 50 | - |
| | Resin | Type | Vinylidene fluoride-propylene hexafluoride copolymer 2 | - | Acrylic | - | Acrylic | - | Acrylic | Acrylic | Acrylic | - |
| | | Content ratio (mass%) | | - | 3.5 | - | 3.5 | - | 3.5 | 3.5 | 3.5 | - |
| Thickness of electrically conductive layer ($\mu$m) | | | 30 | - | 33 | - | 34 | - | 35 | 33 | 35 | - |

16

(continued)

| Implementation No. | | 1-1 | 1-2 | 1-3 | 1-4 | 1-5 | 1-6 | 1-7 | 1-8 | 1-9 | 1-10 |
|---|---|---|---|---|---|---|---|---|---|---|---|
| | | Comparative Example | Comparative Example | Comparative Example | Comparative Example | Comparative Example | Comparative Example | Present Invention Example | Present Invention Example | Present Invention Example | Comparative Example |
| Contact electrical conductivity | Before accelerated deterioration test (m$\Omega\cdot$cm$^2$) | 7 | 20 | 18 | 16 | 14 | 5 | 3 | 6 | 5 | 40 |
| | After accelerated deterioration test (m$\Omega\cdot$cm$^2$) | 1000< | 1000< | 42 | 26 | 19 | 5 | 4 | 8 | 7 | 1000< |
| | Determination | C | C | C | C | C | A | A | A | A | C |
| | After load fatigue resistance test | - | - | - | - | - | 40 | 5 | 7 | 7 | - |
| | Determination | - | - | - | - | - | C | A | A | A | - |
| Adhesiveness | Determination | - | - | - | - | - | - | A | - A | A | - |

[Table 2]

Table 2

| Implementation No. | | | 1-11 | 1-12 | 1-13 | 1-14 | 1-15 | 1-16 | 1-17 | 1-18 | 1-19 | 1-20 | 1-21 | 1-22 |
|---|---|---|---|---|---|---|---|---|---|---|---|---|---|---|
| | | | Comparative Example | Comparative Example | Comparative Example | Comparative Example | Present Invention Example | Present Invention Example | Present Invention Example | Comparative Example | Present Invention Example | Comparative Example | Present Invention Example | Comparative Example |
| Titanium foil | Base material | | M01 | M01 | M01 | M01 | M01 | M01 | M01 | M02 | M02 | M03 | M03 | M04 |
| | Treatment | Pre-treatment | P02 | P02 | P02 | P02 | P02 | P02 | P02 | P02 | P01 | P02 | P02 | P01 |
| | | Surface treatment | - | H01 | H01 | H01 | H01 | H01 | H02 | H01 | H01 | H01 | H02 | H01 |
| | | Treatment temperature (°C) | - | 70 | 70 | 80 | 80 | 70 | 35 | 70 | 70 | 60 | 40 | 80 |
| | | Treatment time (min) | - | 20 | 20 | 20 | 20 | 25 | 20 | 10 | 30 | 40 | 15 | 10 |
| | | Heating treatment | - | K01 | K01 | K01 | K01 | K01 | K01 | K01 | K01 | K01 | K01 | K01 |
| | | Treatment temperature (°C) | - | 600 | 600 | 300 | 300 | 260 | 300 | 250 | 300 | 600 | 330 | 200 |
| | | Treatment time (min) | - | 7 | 7 | 5 | 5 | 5 | 5 | 5 | 5 | 7 | 5 | 5 |
| | Thin-film XRD measurement | $[I_{TiO}/(I_{TiO})]$ (%) | 0 (-) | 0.3 (-) | 0.3 (-) | 6.2 | 6.2 | 0.5 | 5.0 | 0.2 (-) | 4.3 | 0.3 (-) | 2.0 | 0.1 (-) |
| | Titanium surface roughness | Rsm($\mu$m) | 7.4 | 1.9 | 1.8 | 1.9 | 2.1 | 3.2 | 3.4 | 1.2 | 4.2 | 4.6 | 4.1 | 0.9 |
| | | Re($\mu$m) | <0.01 | 0.3 | 0.29 | 0.38 | 0.39 | 0.4 | 0.06 | 0.02 | 0.48 | 0.5 | 0.05 | 0.1 |
| | Titanium foil contact resistance (m$\Omega \cdot cm^2$) | | 40 | 20 | 20 | 5 | 5 | 9 | 6 | 29 | 6 | 22 | 6 | 35 |

(continued)

| Implementation No. | | | 1-11 | 1-12 | 1-13 | 1-14 | 1-15 | 1-16 | 1-17 | 1-18 | 1-19 | 1-20 | 1-21 | 1-22 |
|---|---|---|---|---|---|---|---|---|---|---|---|---|---|---|
| | | | Comparative Example | Comparative Example | Comparative Example | Comparative Example | Present Invention Example | Present Invention Example | Present Invention Example | Comparative Example | Present Invention Example | Comparative Example | Present Invention Example | Comparative Example |
| Coating material | Solvent | Type | Toluene | - | Toluene | - | Toluene | Toluene | Toluene | Toluene | Toluene | Toluene | Toluene | Toluene |
| | | Content ratio (mass%) | 46.0 | - | 46.0 | - | 46.0 | 46.0 | 46.0 | 46.0 | 46.0 | 46.0 | 46.0 | 46.0 |
| | Dispersant | Type | Oleic acid | - | Oleic acid | - | Oleic acid | Oleic acid | Oleic acid | Oleic acid | Oleic acid | Oleic acid | Oleic acid | Oleic acid |
| | | Number of carbon atoms n | 18 | - | 18 | - | 18 | 18 | 18 | 18 | 18 | 18 | 18 | 18 |
| | | Number of double bonds of carbon m | 1 | - | 1 | - | 1 | 1 | 1 | 1 | 1 | 1 | 1 | 1 |
| | | Content ratio (mass%) | 0.5 | - | 0.5 | - | 0.5 | 0.5 | 0.5 | 0.5 | 0.5 | 0.5 | 0.5 | 0.5 |
| | Electrically conductive powder | Type | Ag | - | Ag | - | Ag | Ag | Ag | Ag | Ag | Ag | Ag | Ag |
| | | Particle size (D50) (nm) | 55 | - | 55 | - | 55 | 55 | 55 | 55 | 55 | 55 | 55 | 55 |
| | | Content ratio (mass%) | 50 | - | 50 | - | 50 | 50 | 50 | 50 | 50 | 50 | 50 | 50 |
| | Resin | Type | Acrylic | - | Acrylic | - | Acrylic | Acrylic | Acrylic | Acrylic | Acrylic | Acrylic | Acrylic | Acrylic |
| | | Content radio (mass%) | 3.5 | - | 3.5 | - | 3.5 | 35 | 3.5 | 3.5 | 3.5 | 3.5 | 3.5 | 3.5 |
| Thickness of electrically conductive layer ($\mu$m) | | | 35 | - | 34 | - | 35 | 32 | 36 | 36 | 36 | 33 | 37 | 33 |

(continued)

| Implementation No. | | 1-11 | 1-12 | 1-13 | 1-14 | 1-15 | 1-16 | 1-17 | 1-18 | 1-19 | 1-20 | 1-21 | 1-22 |
|---|---|---|---|---|---|---|---|---|---|---|---|---|---|
| | | Compara-tive Exam-ple | Compara-tive Exam-ple | Compara-tive Exam-ple | Compara-tive Exam-ple | Present Inven-tion Ex-ample | Present Inven-tion Ex-ample | Present Inven-tion Ex-ample | Compara-tive Exam-ple | Present Inven-tion Ex-ample | Compara-tive Exam-ple | Present Inven-tion Ex-ample | Compara-tive Exam-ple |
| Contact electrical conductivity | Before accelerated deterioration test (mΩ·cm²) | 35 | 20 | 19 | 5 | 3 | 7 | 4 | 27 | 4 | 20 | 5 | 34 |
| | After accelerated deterioration test (mΩ·cm²) | 53 | 35 | 20 | 6 | 4 | 11 | 5 | 30 | 7 | 24 | 6 | 38 |
| | Determination | C | C | C | A | A | B | A | C | A | C | A | C |
| | After load fatigue resistance test | - | - | - | 44 | 5 | 8 | 5 | - | 5 | - | 5 | - |
| | Determination | - | - | - | C | A | A | A | - | A | - | A | - |
| Adhesiveness | Determination | - | - | - | - | A | A | A | - | A | - | A | - |

[Table 3]

Table 3

| Implementation No. | | | 1-23 | 1-24 | 1-25 | 1-26 | 1-27 | 1-28 | 1-29 | 1-30 | 1-31 | 1-32 | 1-33 | 1-34 |
|---|---|---|---|---|---|---|---|---|---|---|---|---|---|---|
| | | | Present Invention Example | Present Invention Examples | Comparative Example | Present Invention Example | Comparative Example | Present Invention Example | Comparative Example | Present Invention Example | Comparative Example | Present Invention Example | Present Invention Example | Comparative Example |
| Titanium foil | Base material | | M04 | M04 | M05 | M05 | M06 | M06 | M07 | M07 | M01 | M01 | M01 | M01 |
| | | Pre-treatment | P01 | P02 | P01 | P02 | P01 | P02 | P01 | P02 | P02 | P01 | P01 | P01 |
| | | Surface treatment | H01 | H02 | H02 | H01 | H01 | H01 | H01 | H01 | H02 | H01 | H02 | H02 |
| | Treatment | Treatment temperature (°C) | 70 | 35 | 30 | 80 | 70 | 80 | 70 | 80 | 80 | 80 | 70 | 70 |
| | | Treatment time (min) | 30 | 25 | 10 | 30 | 10 | 40 | 10 | 40 | 50 | 15 | 15 | 20 |
| | | Heating treatment | K01 | K01 | K01 | K01 | K01 | K01 | K01 | K01 | K01 | K01 | K01 | K01 |
| | | Treatment temperature (°C) | 260 | 270 | 240 | 260 | 230 | 270 | 230 | 350 | 280 | 280 | 320 | 300 |
| | | Treatment time (min) | 5 | 5 | 5 | 5 | 5 | 5 | 5 | 5 | 5 | 5 | 5 | 5 |
| | Thin-film XRD measurement ($I_{TiO}/(I_{Ti}+I_{TiO})$)] (%) | | 0.7 | 1.9 | 0.4 (-) | 0.5 | 0.3 (-) | 1.5 | 0.4 (-) | 1.1 | 0.6 | 0.7 | 0.5 | 0.6 |
| | Titanium surface roughness | Rsm ($\mu$m) | 4.6 | 4.7 | 6.2 | 4.8 | 1 | 5 | 0.9 | 5 | 5.3 | 0.5 | 0.5 | 1.9 |
| | | Ra ($\mu$m) | 0.41 | 0.06 | 0.03 | 0.41 | 0.03 | 0.29 | 0.02 | 0.3 | 0.1 | 0.21 | 0.08 | 0.04 |
| | Titanium foil contact resistance (mΩ·cm²) | | 9 | 6 | 18 | 11 | 21 | 6 | 16 | 7 | 10 | 13 | 14 | 6 |

(continued)

| Implementation No. | | | 1-23 | 1-24 | 1-25 | 1-26 | 1-27 | 1-28 | 1-29 | 1-30 | 1-31 | 1-32 | 1-33 | 1-34 |
|---|---|---|---|---|---|---|---|---|---|---|---|---|---|---|
| | | | Present Invention Example | Present Invention Examples | Comparative Example | Present Invention Example | Comparative Example | Present Invention Example | Comparative Example | Present Invention Example | Comparative Example | Present Invention Example | Present Invention Example | Comparative Example |
| Coating material | Solvent | Type Content ratio (mass%) | Toluene 46.0 | Toluene 46.0 | Toluene 46.0 | Toluene 46.0 | Toluene 46.0 | Toluene 46.0 | Toluene 46.0 | Toluene 46.0 | Toluene 46.0 | Toluene 46.0 | Toluene 46.0 | Toluene 46.0 |
| | Dispersant | Type | Oleic acid | Oleic acid | Oleic acid | Oleic acid | Oleic acid | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 | 18 | 18 | 18 | 18 | 18 |
| | | Number of double bonds of carbon m | 1 | 1 | 1 | 1 | 1 | 1 | 1 | 1 | 1 | 1 | 1 | 1 |
| | | Content ratio (mass%) | 0.5 | 0.5 | 0.5 | 0.5 | 0.5 | 0.5 | 0.5 | 0.5 | 0.5 | 0.5 | 0.5 | 0.5 |
| | Electrically conductive powder | Type | Ag | Ag | Ag | Ag | Ag | Ag | Ag | Ag | Ag | Ag | Ag | Ag |
| | | Particle size (D50) (nm) | 55 | 55 | 55 | 55 | 55 | 55 | 55 | 55 | 55 | 55 | 55 | 55 |
| | | Content ratio (mass%) | 50 | 50 | 50 | 50 | 50 | 50 | 50 | 50 | 50 | 50 | 50 | 50 |
| | Resin | Type | Acrylic | Acrylic | Acrylic | Acrylic | Acrylic | Acrylic | Acrylic | Acrylic | Acrylic | Acrylic | Acrylic | Acrylic |
| | | Content ratio (mass%) | 3.5 | 3.5 | 3.5 | 3.5 | 3.5 | 3.5 | 3.5 | 3.5 | 3.5 | 3.5 | 3.5 | 3.5 |
| Thickness of electrically conductive layer ($\mu$m) | | | 32 | 35 | 31 | 34 | 37 | 34 | 33 | 33 | 35 | 33 | 33 | 35 |

24

| Implementation No. | | 1-23 | 1-24 | 1-25 | 1-26 | 1-27 | 1-28 | 1-29 | 1-30 | 1-31 | 1-32 | 1-33 | 1-34 |
|---|---|---|---|---|---|---|---|---|---|---|---|---|---|
| | | Present Invention Example | Present Invention Examples | Comparative Example | Present Invention Example | Comparative Example | Present Invention Example | Comparative Example | Present Invention Example | Comparative Example | Present Invention Example | Present Invention Example | Comparative Example |
| Contact electrical conductivity | Before accelerated deterioration test ($m\Omega \cdot cm^2$) | 8 | 5 | 16 | 10 | 20 | 4 | 15 | 5 | 11 | 13 | 14 | 5 |
| | After accelerated deterioration test ($m\Omega \cdot cm^2$) | 9 | 7 | 20 | 12 | 25 | 5 | 18 | 6 | 14 | 14 | 15 | 7 |
| | Determination | A | A | C | B | C | A | C | A | B | B | B | A |
| | After load fatigue resistance test | 9 | 6 | - | 12 | - | 4 | - | 6 | 12 | 13 | 14 | 6 |
| | Determination | A | A | - | B | - | A | - | A | B | B | B | A |
| Adhesiveness | Determination | A | A | - | A | - | A | - | A | B | A | A | B |

EP 3 082 185 A1

As Comparative Examples, a case where the binder described in JP 2010-140886A (Patent Literature 29) in which carbon and a PTFE resin were mixed was applied to the surface of a stainless steel foil (implementation number 1-1 in Table 1) is shown, and cases where the electrically conductive layer was formed on the surface of a titanium base foil not satisfying the formula $[I_{TiO}/(I_{Ti} + I_{TiO})] \geq 0.5\%$ in thin-film XRD measurement (implementation numbers 1-3 and 1-5 in Table 1, implementation numbers 1-11, 1-13, 1-18, 1-20, and 1-22 in Table 2, and implementation numbers 1-25, 1-27, and 1-29 in Table 3) are shown.

Further, as Comparative Examples, a case where the titanium base foil satisfies the formula mentioned above but the electrically conductive layer is not formed on its surface (implementation number 1-14 in Table 2) is shown, and cases where the formula mentioned above is not satisfied and the electrically conductive layer is not formed on the surface (implementation numbers 1-2, 1-4, 1-6, and 1-10 in Table 1, and implementation number 1-12 in Table 2) are shown.

In the case where the surface roughness Rsm of titanium is larger than 5.0 μm and the case where the Ra is smaller than 0.05 μm, as in Comparative Examples 1-31 and 1-34, a result of the adhesiveness between the titanium foil and the electrically conductive layer being small has been obtained. In contrast, when the Rsm is 0.5 to 5.0 μm and the Ra is 0.05 to 0.5 μm, a result of peeling not occurring at the interface between the titanium foil and the electrically conductive layer has been obtained in the adhesiveness evaluation.

In Comparative Example 2-1, during the accelerated deterioration test, the aqueous solution containing a high concentration of fluoride ions passed through an adhesion failure portion between the PTFE resin and the graphite and reached the stainless steel foil of the base material, and the base material was deteriorated; consequently, the contact electrical conductivity was worsened.

It is found that, even in the titanium base foil satisfying the formula mentioned above, when the electrically conductive layer is not formed on its surface, the titanium base foil is deteriorated and the contact electrical conductivity is worsened. Even when the electrically conductive layer is formed on the surface of the titanium base foil, the contact electrical conductivity is worsened in the case where the titanium base foil does not satisfy the formula mentioned above and the case of a titanium base foil with low electrical conductivity.

By forming the electrically conductive layer on the surface of the titanium base foil satisfying the formula mentioned above, a separator having good contact electrical conductivity and durability of not being deteriorated in the accelerated deterioration test has been obtained.

The results when the resin to be blended in the electrically conductive coating material that forms the electrically conductive layer was changed are shown in Table 4 and Table 5 (continuation of Table 4).

[Table 4]

Table 4

| Implementation No. | | | 2-1 | 2-2 | 2-3 | 2-4 | 2-5 | 2-6 | 2-7 | 2-8 | 2-9 |
|---|---|---|---|---|---|---|---|---|---|---|---|
| | | | Comparative Example | Present Invention Example | Present Invention Example | Present Invention Example | Present Invention Example | Comparative Example | Present Invention Example | Present Invention Example | Present Invention Example |
| Titanium foil | Base material | | M01 | M01 | M01 | M02 | M02 | M03 | M03 | M03 | M04 |
| | Treatment | Pre-treatment | P02 | P02 | P02 | P01 | P01 | P02 | P02 | P02 | P02 |
| | | Surface treatment | H01 | H01 | H01 | H01 | H01 | H02 | H02 | H02 | H02 |
| | | Treatment temperature (°C) | 80 | 80 | 80 | 80 | 80 | 40 | 40 | 40 | 35 |
| | | Treatment time (min) | 20 | 20 | 20 | 20 | 20 | 15 | 15 | 15 | 25 |
| | | Heating treatment | K01 | K01 | K01 | K01 | K01 | K01 | K01 | K01 | K01 |
| | | Treatment temperature (°C) | 300 | 300 | 300 | 260 | 260 | 330 | 330 | 330 | 270 |
| | | Treatment time (min) | 5 | 5 | 5 | 5 | 5 | 5 | 5 | 5 | 5 |
| | Thin-film XRD measurement | $[I_{TiO}/(I_{Ti}+I_{TiO})]$ (%) | 6.2 | 6.2 | 6.2 | 3.1 | 3.1 | 2.0 | 2.0 | 2.0 | 1.9 |
| | Titanium surface roughness | Rsm($\mu$ m) | 1.8 | 1.9 | 2.0 | 2.0 | 1.9 | 4.0 | 3.9 | 4.1 | 4.7 |
| | | Ra($\mu$ m) | 0.38 | 0.40 | 0.41 | 0.39 | 0.39 | 0.06 | 0.05 | 0.05 | 0.07 |
| | Titanium foil contact resistance (m$\Omega$·cm$^2$) | | 5 | 5 | 5 | 6 | 6 | 6 | 6 | 6 | 6 |

(continued)

| Implementation No. | | | 2-1 | 2-2 | 2-3 | 2-4 | 2-5 | 2-6 | 2-7 | 2-8 | 2-9 |
|---|---|---|---|---|---|---|---|---|---|---|---|
| | | | Comparative Example | Present Invention Example | Present Invention Example | Present Invention Example | Present Invention Example | Comparative Example | Present Invention Example | Present Invention Example | Present Invention Example |
| Coating material | Solvent | Type | Toluene | Toluene | Toluene | Toluene | Toluene | Toluene | Toluene | Toluene | Toluene |
| | | Content ratio (mass%) | 48.0 | 46.0 | 48.0 | 46.0 | 48.0 | 48.0 | 46.0 | 48.0 | 46.0 |
| | Dispersant | Type | Oleic acid | Oleic acid | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 | 18 | 18 |
| | | Number of double bonds of carbon m | 1 | 1 | 1 | 1 | 1 | 1 | 1 | 1 | 1 |
| | | Content ratio (mass%) | 0.5 | 0.5 | 0.5 | 0.5 | 0.5 | 0.5 | 0.5 | 0.5 | 0.5 |
| | Electrically conductive powder | Type | Ag | Ag | Ag | Ag | Ag | Ag | Ag | Ag | Ag |
| | | Particle size (D50) (nm) | 55 | 55 | 55 | 55 | 55 | 55 | 55 | 55 | 55 |
| | | Content ratio (mass%) | 50 | 50 | 50 | 50 | 50 | 50 | 50 | 50 | 50 |
| | Resin | Type | Vinyl chloride | Acrylic | Epoxy | Acrylic | Epoxy | Vinyl chloride | Acrylic | Epoxy | Acrylic |
| | | Content ratio (mass%) | 1.5 | 3.5 | 1.5 | 3.5 | 1.5 | 1.5 | 3.5 | 1.5 | 3.5 |
| Thickness of electrically conductive layer ($\mu$m) | | | 33 | 35 | 30 | 33 | 30 | 32 | 34 | 31 | 35 |
| Contact electrical conductivity | Before accelerated deterioration test ($m\Omega \cdot cm^2$) Before $cm^2$ | | 5 | 3 | 5 | 4 | 5 | 6 | 5 | 5 | 5 |
| | After accelerated deterioration test ($m\Omega \cdot cm^2$) | | 1000< | 4 | 6 | 6 | 7 | 1000< | 6 | 6 | 7 |
| | Determination | | C | A | A | A | A | C | A | A | A |
| | After load fatigue resistance test | | - | 4 | 5 | 5 | 6 | - | 5 | 6 | 6 |
| | Determination | | - | A | A | A | A | - | A | A | A |
| Adhesiveness | Determination | | - | A | A | A | A | - | A | A | A |

[Tables]

Table 5

| | | | 2-10 | 2-11 | 2-12 | 2-13 | 2-14 | 2-15 | 2-16 | 2-17 |
|---|---|---|---|---|---|---|---|---|---|---|
| Implementation No. | | | Present Invention Example | Comparative Example | Present Invention Example | Present Invention Example | Present Invention Example | Present Invention Example | Present Invention Examples | Present Invention Example |
| Titanium foil | Base material | | M04 | M05 | M05 | M05 | M06 | M06 | M07 | M07 |
| | Treatment | Pre-treatment | P02 | P01 | P01 | P01 | P02 | P02 | P02 | P02 |
| | | Surface treatment | H02 | H01 | H01 | H01 | H01 | H01 | H01 | H01 |
| | | Treatment temperature (°C) | 35 | 80 | 80 | 80 | 80 | 80 | 80 | 80 |
| | | Treatment time (min) | 25 | 40 | 40 | 40 | 40 | 40 | 40 | 40 |
| | | Heating treatment | K01 | K01 | K01 | K01 | K01 | K01 | K01 | K01 |
| | | Treatment temperature (°C) | 270 | 300 | 300 | 300 | 270 | 270 | 350 | 350 |
| | | Treatment time (min) | 5 | 5 | 5 | 5 | 5 | 5 | 5 | 5 |
| | Thin-film XRD measurement | $[I_{TiO}/(I_{Ti}+I_{TiO})]$ (%) | 1.9 | 1.9 | 1.9 | 1.9 | 1.5 | 1.5 | 1.1 | 1.1 |
| | Titanium surface roughness | Rsm ($\mu$m) | 4.5 | 5.0 | 49 | 4.8 | 4.9 | 4.7 | 5.0 | 4.9 |
| | | Ra ($\mu$m) | 0.07 | 0.27 | 0.25 | 0.25 | 0.26 | 0.27 | 0.26 | 0.28 |
| | Titanium foil contact resistance (mΩ·cm$^2$) | | 6 | 6 | 6 | 6 | 6 | 6 | 7 | 7 |

EP 3 082 185 A1

| Implementation No. | | | 2-10 | 2-11 | 2-12 | 2-13 | 2-14 | 2-15 | 2-16 | 2-17 |
|---|---|---|---|---|---|---|---|---|---|---|
| | | | Present Invention Example | Comparative Example | Present Invention Example | Present Invention Example | Present Invention Example | Present Invention Example | Present Invention Examples | Present Invention Example |
| Coating material | Solvent | Type Content ratio (mass%) | Toluene 48.0 | Toluene 48.0 | Toluene 46.0 | Toluene 48.0 | Toluene 46.0 | Toluene 48.0 | Toluene 46.0 | Toluene 48.0 |
| | Dispersant | Type | Oleic acid | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 | 18 |
| | | Number of double bonds of carbon m | 1 | 1 | 1 | 1 | 1 | 1 | 1 | 1 |
| | | Content ratio (mass%) | 0.5 | 0.5 | 0.5 | 0.5 | 0.5 | 0.5 | 0.5 | 0.5 |
| | Electrically conductive powder | Type | Ag | Ag | Ag | Ag | Ag | Ag | Ag | Ag |
| | | Particle size (D50) (nm) | 55 | 55 | 55 | 55 | 55 | 55 | 55 | 55 |
| | | Content ratio (mass%) | 50 | 50 | 50 | 50 | 50 | 50 | 50 | 50 |
| | Resin | Type | Epoxy | Vinyl chloride | Acrylic | Epoxy | Acrylic | Epoxy | Acrylic | Epoxy |
| | | Content ratio (mass%) | 1.5 | 1.5 | 3.5 | 1.5 | 3.5 | 1.5 | 3.5 | 1.5 |
| Thickness of electrically conductive layer ($\mu$m) | | | 36 | 34 | 36 | 33 | 34 | 35 | 33 | 30 |
| Contact electrical conductivity | Before accelerated deterioration test ($m\Omega \cdot cm^2$) After accelerated deterioration test ($m\Omega \cdot cm^2$) Determination | | 6 7 A | 6 1000< C | 4 6 A | 5 7 A | 4 5 A | 6 7 A | 5 6 A | 7 7 A |
| | After load fatigue resistance test Determination | | 6 A | - - | 6 A | 5 A | 5 A | 6 A | 5 A | 8 A |
| Adhesiveness | Determination | | A | - | A | A | A | A | A | A |

EP 3 082 185 A1

It is found that, in the case where an acrylic resin or an epoxy resin having a heat-resistant temperature of 80°C or more, which is supposed to be the operating temperature of the fuel cell, is used, the deterioration of the electrically conductive layer is less likely to occur and the criterion of contact electrical conductivity is satisfied in the accelerated deterioration test.

On the other hand, in Comparative Examples in which a vinyl chloride resin having a heat-resistant temperature of lower than 80°C was used (implementation numbers 2-1 and 2-6 in Table 4, and implementation number 2-11 in Table 5), the resin was deteriorated in the accelerated deterioration test, and the titanium base foil came into contact with the solution containing a high concentration of fluoride ions and was deteriorated; consequently, the contact electrical conductivity was significantly worsened.

The results when the particle size of the silver particle was changed are shown in Table 6 and Table 7 (continuation of Table 6).

[Table 6]

Table 6

| Implementation No. | | | 3-1 | 3-2 | 3-3 | 3-4 | 3-5 | 3-6 | 3-7 | 3-8 | 3-9 | 3-10 | 3-11 | 3-12 |
|---|---|---|---|---|---|---|---|---|---|---|---|---|---|---|
| | | | Comparative Example | Comparative Example | Present Invention Example | Present Invention Example | Present Invention Example | Present Invention Example | Comparative Example | Present Invention Example | Present Invention Example | Comparative Example | Present Invention Example | Present Invention Example |
| Titanium foil | | Base material | M01 | M01 | M01 | M01 | M01 | M01 | M02 | M02 | M02 | M03 | M03 | M03 |
| | Treatment | Pre-treatment | P02 | P02 | P02 | P02 | P02 | P02 | P01 | P01 | P01 | P02 | P02 | P02 |
| | | Surface treatment | H01 | H01 | H01 | H01 | H01 | H01 | H01 | H01 | H01 | H02 | H02 | H02 |
| | | Treatment temperature (°C) | 80 | 80 | 80 | 80 | 80 | 80 | 80 | 80 | 80 | 40 | 40 | 40 |
| | | Treatment time (min) | 20 | 20 | 20 | 20 | 20 | 20 | 20 | 20 | 20 | 15 | 15 | 15 |
| | | Heating treatment | K01 | K01 | K01 | K01 | K01 | K01 | K01 | K01 | K01 | K01 | K01 | K01 |
| | | Treatment temperature (°C) | 300 | 300 | 300 | 300 | 300 | 300 | 260 | 260 | 260 | 330 | 330 | 330 |
| | | Treatment time (min) | 5 | 5 | 5 | 5 | 5 | 5 | 5 | 5 | 5 | 5 | 5 | 5 |
| | Thin-film XRD measurement | $[I_{TiO}/(I_{Ti}+I_{TiO})]$ (%) | 6.2 | 6.2 | 6.2 | 6.2 | 6.2 | 6.2 | 3.1 | 3.1 | 3.1 | 2.0 | 2.0 | 2.0 |
| | Titanium surface roughness | Rsm ($\mu m$) | 1.9 | 1.8 | 1.8 | 2.0 | 1.7 | 1.7 | 1.9 | 1.8 | 2.2 | 3.9 | 4.0 | 3.8 |
| | | Ra ($\mu m$) | 0.40 | 0.37 | 0.38 | 0.42 | 0.41 | 0.38 | 0.39 | 0.40 | 0.36 | 0.06 | 0.07 | 0.05 |
| | Titanium foil contact resistance ($m\Omega \cdot cm^2$) | | 5 | 5 | 5 | 5 | 5 | 5 | 6 | 6 | 6 | 6 | 6 | 6 |

(continued)

| Implementation No. | | | 3-1 | 3-2 | 3-3 | 3-4 | 3-5 | 3-6 | 3-7 | 3-8 | 3-9 | 3-10 | 3-11 | 3-12 |
|---|---|---|---|---|---|---|---|---|---|---|---|---|---|---|
| | | | Comparative Example | Comparative Example | Present Invention Example | Present Invention Example | Present Invention Example | Present Invention Example | Comparative Example | Present Invention Example | Present Invention Example | Comparative Example | Present Invention Example | Present Invention Example |
| Coating material | Solvent | Type Content ratio (mass%) | Toluene 46.0 | Toluene 46.0 | Toluene 46.0 | Toluene 46.0 | Toluene 46.0 | Toluene 46.0 | Toluene 48.0 | Toluene 48.0 | Toluene 48.0 | Toluene 48.0 | Toluene 48.0 | Toluene 48.0 |
| | Dispersant | Type | Oleic acid | Oleic acid | Oleic acid | Oleic acid | Oleic acid | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 | 18 | 18 | 18 | 18 | 18 |
| | | Number of double bonds of carbon m | 1 | 1 | 1 | 1 | 1 | 1 | 1 | 1 | 1 | 1 | 1 | 1 |
| | | Content ratio (mass%) | 0.5 | 0.5 | 0.5 | 0.5 | 0.5 | 0.5 | 0.5 | 0.5 | 0.5 | 0.5 | 0.5 | 0.5 |
| | Electrically conductive powder | Type | Ag | Ag | Ag | Ag | Ag | Ag | Ag | Ag | Ag | Ag | Ag | Ag |
| | | Particle size (D50) (nm) | 5 | 1000 | 10 | 55 | 200 | 500 | 1000 | 10 | 55 | 5 | 55 | 500 |
| | | Content ratio (mass%) | 50 | 50 | 50 | 50 | 50 | 50 | 50 | 50 | 50 | 50 | 50 | 50 |
| | Resin | Type | Acrylic | Acrylic | Acrylic | Acrylic | Acrylic | Acrylic | Epoxy | Epoxy | Epoxy | Epoxy | Epoxy | Epoxy |
| | | Content ratio (mass%) | 35 | 3.5 | 3.5 | 3.5 | 3.5 | 3.5 | 1.5 | 1.5 | 1.5 | 1.5 | 1.5 | 1.5 |
| Thickness of electrically conductive layer ($\mu$m) | | | 33 | 35 | 31 | 35 | 36 | 39 | 38 | 32 | 30 | 36 | 32 | 36 |

| Implementation No. | | 3-1 | 3-2 | 3-3 | 3-4 | 3-5 | 3-6 | 3-7 | 3-8 | 3-9 | 3-10 | 3-11 | 3-12 |
|---|---|---|---|---|---|---|---|---|---|---|---|---|---|
| | | Comparative Example | Comparative Example | Present Invention Example | Present Invention Example | Present Invention Example | Present Invention Example | Comparative Example | Present Invention Example | Present Invention Example | Comparative Example | Present Invention Example | Present Invention Example |
| Contact electrical conductivity | Before accelerated deterioration test ($m\Omega \cdot cm^2$) After accelerated deterioration test ($m \cdot cm^2$) Determination | 25 29 C | 30 110 C | 10 12 B | 3 4 A | 7 8 A | 10 13 B | 25 95 C | 9 11 B | 5 7 A | 21 23 C | 5 6 A | 10 12 B |
| | After load fatigue resistance test Determination | - - | - - | 11 | 4 A | 7 A | 10 B | - C | 10 B | 5 A | - C | 6 A | 11 B |
| Adhesiveness | Determination | - | - | A | A | A | A | - | A | A | - | A | A |

EP 3 082 185 A1

[Table 7]

Table 7

| | | 3-13 | 3-14 | 3-15 | 3-16 | 3-17 | 3-18 | 3-19 | 3-20 | 3-21 | 3-22 | 3-23 | 3-24 |
|---|---|---|---|---|---|---|---|---|---|---|---|---|---|
| Implementation No. | | Comparative Example | Present Invention Example | Present Invention Example | Comparative Example | Present Invention Example | Present Invention Example | Present Invention Example | Present Invention Example | Present Invention Example | Comparative Example | Comparative Example | Present Invention Example |
| Base material | | M04 | M04 | M04 | M05 | M05 | M05 | M06 | M06 | M06 | M07 | M07 | M07 |
| | Pre-treatment | P02 | P02 | P02 | P01 | P01 | P01 | P02 | P02 | P02 | P02 | P02 | P02 |
| | Surface treatment | H02 | H02 | H02 | H01 | H01 | H01 | H01 | H01 | H01 | H01 | H01 | H01 |
| | Treatment temperature (°C) | 35 | 35 | 35 | 80 | 80 | 80 | 80 | 80 | 80 | 80 | 80 | 80 |
| | Treatment time (min) | 25 | 25 | 25 | 40 | 40 | 40 | 40 | 40 | 40 | 40 | 40 | 40 |
| Treatment | Heating treatment | K01 | K01 | K01 | K01 | K01 | K01 | K01 | K01 | K01 | K01 | K01 | K01 |
| | Treatment temperature (°C) | 270 | 270 | 270 | 300 | 300 | 300 | 270 | 270 | 270 | 350 | 350 | 350 |
| | Treatment time (min) | 5 | 5 | 5 | 5 | 5 | 5 | 5 | 5 | 5 | 5 | 5 | 5 |
| Titanium foil | Thin-film XRD measurement $[I_{TiO}/(I_{Ti}+I_{TiO})]$ (%) | 1.9 | 1.9 | 1.9 | 1.9 | 1.9 | 1.9 | 1.5 | 1.5 | 1.5 | 1.1 | 1.1 | 1.1 |
| | Titanium surface roughness Rsm($\mu m$) | 4.6 | 4.5 | 4.7 | 4.8 | 4.8 | 4.6 | 4.9 | 4.8 | 4.8 | 4.5 | 4.6 | 4.7 |
| | Ra($\mu m$) | 0.08 | 0.07 | 0.07 | 0.24 | 0.25 | 0.25 | 0.23 | 0.20 | 0.25 | 0.26 | 0.24 | 0.27 |
| | Titanium foil contact resistance (mΩ·cm²) | 6 | 6 | 6 | 6 | 6 | 6 | 6 | 6 | 6 | 7 | 7 | 7 |

(continued)

| Implementation No. | | | 3-13 | 3-14 | 3-15 | 3-16 | 3-17 | 3-18 | 3-19 | 3-20 | 3-21 | 3-22 | 3-23 | 3-24 |
|---|---|---|---|---|---|---|---|---|---|---|---|---|---|---|
| | | | Comparative Example | Present Invention Example | Present Invention Example | Comparative Example | Present Invention Example | Present Invention Example | Present Invention Example | Present Invention Example | Present Invention Example | Comparative Example | Comparative Example | Present Invention Example |
| Coating material | Solvent | Type Content ratio (mass%) | Toluene 46.0 | Toluene 46.0 | Toluene 46.0 | Toluene 46.0 | Toluene 46.0 | Toluene 46.0 | Toluene 48.0 | Toluene 48.0 | Toluene 48.0 | Toluene 46.0 | Toluene 48.0 | Toluene 46.0 |
| | Dispersant | Type | Oleic acid | Oleic acid | Oleic acid | Oleic acid | Oleic acid | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 | 18 | 18 | 18 | 18 | 18 |
| | | Number of double bonds of carbon r | 1 | 1 | 1 | 1 | 1 | 1 | 1 | 1 | 1 | 1 | 1 | 1 |
| | | Content ratio (mass%) | 0.5 | 0.5 | 0.5 | 0.5 | 0.5 | 0.5 | 0.5 | 0.5 | 0.5 | 0.5 | 0.5 | 0.5 |
| | Electrically conductive powder | Type | Ag | Ag | Ag | Ag | Ag | Ag | Ag | Ag | Ag | Ag | Ag | Ag |
| | | Particle size (D50) (nm) | 5 | 10 | 55 | 1000 | 500 | 55 | 10 | 55 | 500 | 5 | 1000 | 55 |
| | | Content ratio (mass%) | 50 | 50 | 50 | 50 | 50 | 50 | 50 | 50 | 50 | 50 | 50 | 50 |
| | Resin | Type | Acrylic | Acrylic | Acrylic | Acrylic | Acrylic | Acrylic | Epoxy | Epoxy | Epoxy | Acrylic | Acrylic | Acrylic |
| | | Content ratio (mass%) | 3.5 | 3.5 | 3.5 | 3.5 | 3.5 | 3.5 | 1.5 | 1.5 | 1.5 | 3.5 | 3.5 | 3.5 |
| Thickness of electrically conductive layer (μm) | | | 33 | 31 | 35 | 35 | 35 | 36 | 31 | 30 | 34 | 36 | 37 | 33 |

EP 3 082 185 A1

38

| Implementation No. | | 3-13 | 3-14 | 3-15 | 3-16 | 3-17 | 3-18 | 3-19 | 3-20 | 3-21 | 3-22 | 3-23 | 3-24 |
|---|---|---|---|---|---|---|---|---|---|---|---|---|---|
| | | Comparative Example | Present Invention Example | Present Invention Example | Comparative Example | Present Invention Example | Present Invention Example | Present Invention Example | Present Invention Example | Present Invention Example | Comparative Example | Comparative Example | Present Invention Example |
| Contact electrical conductivity | Before accelerated deterioration test ($m\Omega \cdot cm^2$) | 23 | 11 | 5 | 30 | 11 | 4 | 9 | 6 | 11 | 26 | 28 | 5 |
| | After accelerated deterioration test ($m\Omega \cdot cm^2$) | 24 | 14 | 7 | 80 | 12 | 6 | 10 | 7 | 13 | 29 | 95 | 6 |
| | Determination | C | B | A | C | B | A | B | A | B | C | C | A |
| | After load fatigue resistance test | - | 12 | 6 | - | 12 | 5 | 10 | 6 | 11 | - | - | 5 |
| | Determination | - | B | A | - | B | A | B | A | B | - | - | A |
| Adhesiveness | Determination | - | A | A | - | A | A | A | A | A | - | - | A |

In Comparative Examples in which the particle size of the silver particle is as large as 1000 nm (implementation numbers 3-2 and 3-7 in Table 6, and implementation numbers 3-16 and 3-23 in Table 7) and Comparative Examples in which the particle size is as small as 5 nm (implementation numbers 3-1 and 3-10 in Table 6, and implementation numbers 3-13 and 3-22 in Table 7), due to the worsening of the fluidity of the electrically conductive coating material, adhesion failure between the resin and the titanium base material and contact failure between silver particles occurred, and the contact electrical conductivity was worsened.

In Present Invention Examples in which the particle size of the silver particle is in the range of 10 to 500 nm, good contact electrical conductivity has been obtained stably.

The results when the content ratio of silver particles of the electrically conductive coating material and the content ratio of the dispersant were changed are shown in Table 8 and Table 9 (continuation of Table 8).

[Table 8]

Table 8

| Implementation No, | | | 4-1 | 4-2 | 4-3 | 4-4 | 4-5 | 4-6 | 4-7 | 4-8 | 4-9 | 4-10 | 4-11 | 4-12 |
|---|---|---|---|---|---|---|---|---|---|---|---|---|---|---|
| | | | Comparative Example | Preset Invention Example | Present Invention Example | Present Invention Example | Present Invention Example | Comparative Example | Present Invention Example | Present Invention Example | Present Invention Example | Comparative Example | Present Intention Example | Present Invention Example |
| Titanium foil | Base material | | M01 | M01 | M01 | M01 | M01 | M01 | M01 | M01 | M01 | M01 | M01 | M01 |
| | Treatment | Pre-treatment | P02 | P02 | P02 | P02 | P02 | P02 | P02 | P02 | P02 | P02 | P02 | P02 |
| | | Surface treatment, | H01 | H01 | H01 | H01 | H01 | H01 | H01 | H01 | H01 | H01 | H01 | H01 |
| | | Treatment temperature (°C) | 80 | 80 | 80 | 80 | 80 | 80 | 80 | 80 | 80 | 80 | 80 | 80 |
| | | Treatment time (min) | 20 | 20 | 20 | 20 | 20 | 20 | 20 | 20 | 20 | 20 | 20 | 20 |
| | | Heating treatment | K01 | K01 | K01 | K01 | K01 | K01 | K01 | K01 | K01 | K01 | K01 | K01 |
| | | Treatment temperature (°C) | 300 | 300 | 300 | 300 | 300 | 300 | 300 | 300 | 300 | 300 | 300 | 300 |
| | | Treatment time (min) | 5 | 5 | 5 | 5 | 5 | 5 | 5 | 5 | 5 | 5 | 5 | 5 |
| | Thin-film XRD measurement | $[I_{TiO}/([I_{Ti}+I_{TiO})]$ (%) | 6.2 | 6.2 | 6.2 | 6.2 | 6.2 | 6.2 | 6.2 | 6.2 | 6.2 | 6.2 | 6.2 | 6.2 |
| | Titanium surface roughness | Rsm($\mu$m) | 1.9 | 19 | 1.8 | 1.7 | 2.2 | 2.1 | 1.8 | 2.1 | 1.7 | 1.9 | 2.1 | 2.1 |
| | | Ra($\mu$m) | 0.40 | 0.39 | 0.40 | 0.43 | 0.41 | 0.37 | 0.42 | 0.42 | 0.40 | 0.39 | 0.40 | 0.38 |
| | Titanium foil contact resistance (m$\Omega \cdot$cm$^2$) | | 5 | 5 | 5 | 5 | 5 | 5 | 5 | 5 | 5 | 5 | 5 | 5 |

| Implementation No, | | | 4-1 | 4-2 | 4-3 | 4-4 | 4-5 | 4-6 | 4-7 | 4-8 | 4-9 | 4-10 | 4-11 | 4-12 |
|---|---|---|---|---|---|---|---|---|---|---|---|---|---|---|
| | | | Compara-tive Example | Preset In-vention Example | Present Invention Example | Present Invention Example | Present Invention Example | Comparative Example | Present Invention Example | Present Invention Example | Present Invention Example | Comparative Example | Present Intention Example | Present Invention Example |
| Coating ma-terial | Solvent | Type | Toluene | Toluene | Toluene | Toluene | Toluene | Toluene | Toluene | Toluene | Toluene | Toluene | Toluene | Toluene |
| | | Content ratio (maas%) | 86.4 | 76.3 | 76.3 | 76.3 | 66.2 | 46.4 | 46.3 | 46.0 | 45.5 | 45.3 | 10.7 | 5.6 |
| | Dispersant | Type | Oleic acid | Oleic acid | Oleic acid | Oleic acid | Oleic acid | Oleic acid | Olaic acid | Oleic acid | Oleic acid | Oleic acid | Oleic acid | Oleic acid |
| | | Number of carbon atoms n | 18 | 18 | 18 | 18 | 18 | 18 | 18 | 18 | 18 | 18 | 18 | 18 |
| | | Number of double bonds of carbon m | 1 | 1 | 1 | 1 | 1 | 1 | 1 | 1 | 1 | 1 | 1 | 1 |
| | | Content ratio (mass%) | 0.1 | 0.2 | 0.2 | 0.2 | 0.3 | 0.1 | 0.2 | 0.5 | 1.0 | 1.2 | 0.9 | 0.9 |
| | Electrically conductive powder | Type | Ag | Ag | Ag | Ag | Ag | Ag | Ag | Ag | Ag | Ag | Ag | Ag |
| | | Particle size (D50) (nm) | 55 | 55 | 10 | 500 | 55 | 55 | 55 | 55 | 55 | 55 | 55 | 55 |
| | | Content ratio (mass%) | 10 | 20 | 20 | 20 | 30 | 50 | 50 | 50 | 50 | 50 | 85 | 90 |
| | Resin | Type | Acrylic | Acrylic | Acrylic | Acrylic | Acrylic | Acrylic | Acrylic | Acrylic | Acrylic | Acrylic | Acrylic | Acrylic |
| | | Content ratio (mass%) | 3.5 | 3.5 | 3.5 | 3.5 | 3.5 | 3.5 | 3.5 | 3.5 | 3.5 | 3.5 | 3.5 | 3.5 |
| Thickness of electrically conductive layer ($\mu$ m) | | | 33 | 31 | 32 | 32 | 35 | 38 | 36 | 35 | 34 | 35 | 35 | 36 |

EP 3 082 185 A1

42

(continued)

| Implementation No, | | 4-1 | 4-2 | 4-3 | 4-4 | 4-5 | 4-6 | 4-7 | 4-8 | 4-9 | 4-10 | 4-11 | 4-12 |
|---|---|---|---|---|---|---|---|---|---|---|---|---|---|
| | | Compara-tive Exam-ple | Preset In-vention Example | Present Invention Example | Present Invention Example | Present Invention Example | Compara-tive Exam-ple | Present Invention Example | Present Invention Example | Present Invention Example | Compara-tive Exam-ple | Present Intention Example | Present Invention Example |
| Contact elec-trical conduc-tivity | Before accelerated deterio-ration test (m$\Omega\cdot$cm$^2$) | 32 | 11 | 13 | 12 | 7 | 20 | 13 | 3 | 10 | 14 | 8 | 11 |
| | After accelerated deteriora-tion test (m$\Omega\cdot$cm$^2$) | 40 | 13 | 14 | 13 | 8 | 35 | 14 | 4 | 12 | 16 | 9 | 14 |
| | Determination | C | B | B | B | A | C | B | A | B | C | A | B |
| | After load fatigue resistance test | - | 11 | 14 | 12 | 8 | - | 13 | 4 | 10 | - | 8 | 11 |
| | Determination | - | B | B | B | A | - | B | A | B | - | A | B |
| Adhesiveness | Determination | - | A | A | A | A | - | A | A | A | - | A | A |

[Table 9]

Table 9

| Implementation No. | | | 4-13 | 4-14 | 4-15 | 4-16 | 4-17 | 4-18 | 4-19 | 4-20 | 4-21 | 4-22 | 4-23 |
|---|---|---|---|---|---|---|---|---|---|---|---|---|---|
| | | | Present Invention Example | Present Intention Example | Comparative Example | Comparative Example | Present Invention Example | Present Invention Example | Present Invention Example | Present Invention Example | Present Invention Example | Present Invention Example | Present Invention Example |
| Titanium foil | Base material | | M01 | M01 | M01 | M02 | M02 | M03 | M03 | M04 | M05 | M06 | M07 |
| | Treatment | Pre-treatment | P02 | P02 | P02 | P01 | P01 | P02 | P02 | P02 | P01 | P02 | P02 |
| | | Surface treatment | H01 | H01 | H01 | H01 | H01 | H02 | H02 | H02 | H01 | H01 | H01 |
| | | Treatment temperature (°C) | 80 | 80 | 80 | 80 | 80 | 40 | 40 | 35 | 80 | 80 | 80 |
| | | Treatment time (min) | 20 | 20 | 20 | 20 | 20 | 15 | 15 | 25 | 40 | 40 | 40 |
| | | Heating treatment | K01 | K01 | K01 | K01 | K01 | K01 | K01 | K01 | K01 | K01 | K01 |
| | | Treatment temperature (°C) | 300 | 300 | 300 | 260 | 260 | 330 | 330 | 270 | 300 | 270 | 350 |
| | | Treatment time (min) | 5 | 5 | 5 | 5 | 5 | 5 | 5 | 5 | 5 | 5 | 5 |
| | Thin-film XRD measurement | $[I_{TiO}/(I_{Ti}+I_{TiO})](\%)$ | 6.2 | 6.2 | 6.2 | 3.1 | 3.1 | 2.0 | 2.0 | 1.9 | 1.9 | 1.5 | 1.1 |
| | Titanium surface roughness | $Rsm(\mu m)$ | 2 | 1.8 | 1.7 | 1.9 | 1.6 | 4.0 | 4.1 | 4.6 | 4.5 | 4.4 | 4.4 |
| | | $Ra(\mu m)$ | 0.41 | 0.40 | 0.37 | 0.39 | 0.38 | 0.07 | 0.06 | 0.08 | 0.26 | 0.25 | 0.26 |
| | Titanium foil contact resistance $(m\Omega \cdot cm^2)$ | | 5 | 5 | 5 | 6 | 6 | 6 | 6 | 6 | 6 | 6 | 7 |

| Implementation No. | | | 4-13 | 4-14 | 4-15 | 4-16 | 4-17 | 4-18 | 4-19 | 4-20 | 4-21 | 4-22 | 4-23 |
|---|---|---|---|---|---|---|---|---|---|---|---|---|---|
| | | | Present Invention Example | Present Intention Example | Comparative Example | Comparative Example | Present Invention Example | Present Invention Example | Present Invention Example | Present Invention Example | Present Invention Example | Present Invention Example | Present Invention Example |
| Coating material | Solvent | Type Content ratio (mass%) | Toluene 5.6 | Toluene 5.6 | Toluene 2.6 | Toluene 88.4 | Toluene 78.3 | Toluene 12.6 | Toluene 7.6 | Toluene 10.6 | Toluene 46.3 | Toluene 46.0 | Toluene 76.3 |
| | Dispersant | Type | Oleic acid | Oleic acid | Oleic acid | Oleic acid | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 | 18 | 18 | 18 | 18 |
| | | Number of double bonds of carbon m | 1 | 1 | 1 | 1 | 1 | 1 | 1 | 1 | 1 | 1 | 1 |
| | | Content ratio (mass%) | 0.9 | 0.9 | 0.9 | 0.1 | 0.2 | 0.9 | 0.9 | 0.9 | 0.2 | 1.0 | 0.2 |
| | Electrically conductive powder | Type | Ag | Ag | Ag | Ag | Ag | Ag | Ag | Ag | Ag | Ag | Ag |
| | | Particle size (D50) (nm) | 10 | 500 | 55 | 55 | 500 | 55 | 10 | 500 | 55 | 55 | 500 |
| | | Content ratio (mass%) | 90 | 90 | 93 | 10 | 20 | 85 | 90 | 85 | 50 | 50 | 20 |
| | Resin | Type | Acrylic | Acrylic | Acrylic | Epoxy | Epoxy | Epoxy | Epoxy | Acrylic | Acrylic | Epoxy | Acrylic |
| | | Content ratio (mass%) | 3.5 | 3.5 | 3.5 | 1.5 | 1.5 | 1.5 | 1.5 | 3.5 | 3.5 | 3 | 3.5 |
| Thickness of electrically conductive layer ($\mu$m) | | | 33 | 32 | 34 | 34 | 31 | 38 | 38 | 34 | 33 | 36 | 34 |
| Contact electrical conductivity | Before accelerated deterioration test (m$\Omega \cdot$cm$^2$) | | 9 | 13 | 15 | 29 | 12 | 7 | 11 | 8 | 11 | 13 | 11 |
| | After accelerated deterioration test (m$\Omega \cdot$cm$^2$) | | 11 | 14 | 32 | 31 | 13 | 8 | 12 | 9 | 12 | 14 | 13 |
| | Determination | | B | B | C | C | B | A | B | A | B | B | B |
| | After load fatigue resistance test | | 10 | 13 | - | - | 12 | 8 | 11 | 8 | 11 | 14 | 13 |
| | Determination | | B | B | - | - | B | A | B | A | B | B | B |
| Adhesiveness | Determination | | A | A | - | - | A | A | A | A | A | A | A |

In Present Invention Examples in which the content ratio of the dispersant is 0.2 to 1.0 mass%, good contact electrical conductivity has been obtained stably. In Comparative Examples in which the content ratio of the dispersant is as small as 0.1 mass% (implementation numbers 4-1 and 4-6 in Table 8, and implementation number 4-16 in Table 9), silver particles aggregate and the dispersion is made non-uniform, and the electrical conductivity of the electrically conductive layer is reduced.

Even when the content ratio of the dispersant is 0.9 mass%, in Comparative Example in which the content ratio of silver particles is too large, specifically 93 mass% (implementation number 4-15 in Table 9), the fluidity of the Electrically conductive coating material was reduced, hence the surface of the titanium base foil was not able to be uniformly coated and a microscopic defect like a pinhole occurred in the electrically conductive layer, and fluoride ions entered the defect and came into contact with the titanium base foil; consequently, the contact electrical conductivity was worsened.

When the content ratio of silver particles is 20 to 90 mass%, good contact electrical conductivity can be obtained stably.

The results when the thickness of the electrically conductive layer was changed are shown in Table 10 and Table 11 (continuation of Table 10).

[Table 10]

Table 10

| Implementation No. | | | 5-1 | 5-2 | 5-3 | 5-4 | 5-5 | 5-6 |
|---|---|---|---|---|---|---|---|---|
| | | | Comparative Example | Present Invention Example | Present Invention Example | Present Invention Example | Present Invention Example | Comparative Example |
| Titanium foil | | Base material | M01 | M01 | M01 | M01 | M01 | M01 |
| | Treatment | Pre-treatment | P02 | P02 | P02 | P02 | P02 | P02 |
| | | Surface treatment | H01 | H01 | H01 | H01 | H01 | H01 |
| | | Treatment temperature (°C) | 80 | 80 | 80 | 80 | 80 | 80 |
| | | Treatment time (min) | 20 | 20 | 20 | 20 | 20 | 20 |
| | | Heating treatment | K01 | K01 | K01 | K01 | K01 | K01 |
| | | Treatment temperature (°C) | 300 | 300 | 300 | 300 | 300 | 300 |
| | | Treatment time (min) | 5 | 5 | 5 | 5 | 5 | 5 |
| | Thin-film XRD measurement | $[I_{TiO}/(I_{TiO}+I_{TiO})]$ (%) | 6.2 | 6.2 | 6.2 | 6.2 | 6.2 | 6.2 |
| | Titanium surface roughness | Rsm($\mu$m) | 1.9 | 2.1 | 1.7 | 1.8 | 2.0 | 1.9 |
| | | Ra($\mu$m) | 0.40 | 0.39 | 0.42 | 0.41 | 0.42 | 0.39 |
| | Titanium foil | contact resistance (m$\Omega \cdot$cm$^2$) | 5 | 5 | 5 | 5 | 5 | 5 |

| Implementation No. | | | 5-1 | 5-2 | 5-3 | 5-4 | 5-5 | 5-6 |
|---|---|---|---|---|---|---|---|---|
| | | | Comparative Example | Present Invention Example | Present Invention Example | Present Invention Example | Present Invention Example | Comparative Example |
| Coating material | Solvent | Type | Toluene | Toluene | Toluene | Toluene | Toluene | Toluene |
| | | Content ratio (mass%) | 48.0 | 48.0 | 48.0 | 48.0 | 48.0 | 48.0 |
| | Dispersant | Type | Oleic acid | Oleic acid | Oleic acid | Oleic acid | Oleic acid | Oleic acid |
| | | Number of carbon atoms n | 18 | 18 | 18 | 18 | 18 | 18 |
| | | Number of double bonds of carbon m | 1 | 1 | 1 | 1 | 1 | 1 |
| | | Content ratio (mass%) | 0.5 | 0.5 | 0.5 | 0.5 | 0.5 | 0.5 |
| | Electrically conductive powder | Type | Ag | Ag | Ag | Ag | Ag | Ag |
| | | Particle size (D50) (nm) | 55 | 55 | 55 | 55 | 55 | 55 |
| | | Content ratio (mass%) | 50 | 50 | 50 | 50 | 50 | 50 |
| | Resin | Type | Epoxy | Epoxy | Epoxy | Epoxy | Epoxy | Epoxy |
| | | Content ratio (mass%) | 1.5 | 1.5 | 1.5 | 1.5 | 1.5 | 1.5 |
| Thickness of electrically conductive layer ($\mu$m) | | | 3 | 5 | 10 | 42 | 50 | 60 |
| Contact electrical conductivity | Before accelerated deterioration test (m$\Omega \cdot$cm$^2$) | | 6 | 5 | 5 | 7 | 10 | 19 |
| | After accelerated deterioration test (m$\Omega \cdot$cm$^2$) | | 25 | 13 | 9 | 8 | 12 | 20 |
| | Determination | | C | B | A | A | B | C |
| | After load fatigue resistance test | | - | 5 | 6 | 7 | 11 | - |
| | Determination | | - | A | A | A | B | - |
| Adhesiveness | Determination | | - | A | A | A | A | - |

EP 3 082 185 A1

[Table 11]

Table 11

| Implementation No. | | | 5-7 | 5-8 | 5-9 | 5-10 | 5-11 | 5-12 | 5-13 |
|---|---|---|---|---|---|---|---|---|---|
| | | | Present Invention Example | Present Invention Example | Present Invention Example | Present Invention Example | Present Invention Example | Present Invention Example | Present Invention Example |
| Titanium foil | Base material | | M02 | M02 | M03 | M04 | M05 | M06 | M07 |
| | Treatment | Pre-treatment | P01 | P01 | P02 | P02 | P01 | P02 | P02 |
| | | Surface treatment | H01 | H01 | H02 | H02 | H01 | H01 | H01 |
| | | Treatment temperature (°C) | 80 | 80 | 40 | 35 | 80 | 80 | 80 |
| | | Treatment time (min) | 20 | 20 | 15 | 25 | 40 | 40 | 40 |
| | | Heating treatment | K01 | K01 | K01 | K01 | K01 | K01 | K01 |
| | | Treatment temperature (°C) | 260 | 260 | 330 | 270 | 300 | 270 | 350 |
| | | Treatment time (min) | 5 | 5 | 5 | 5 | 5 | 5 | 5 |
| | Thin-film XRD measurement | $[I_{TiO}/(I_{TiO}+I_{TiO})]$ (%) | 3.1 | 3.1 | 2.0 | 1.9 | 1.9 | 1.5 | 1.1 |
| | Titanium surface roughness | Rsm($\mu$m) | 2.0 | 1.7 | 3.8 | 4.4 | 4.5 | 4.3 | 4.6 |
| | | Ra($\mu$m) | 0.37 | 0.35 | 0.09 | 0.07 | 0.24 | 0.26 | 0.27 |
| | Titanium foil contact resistance (m$\Omega\cdot$cm$^2$) | | 6 | 6 | 6 | 6 | 6 | 6 | 7 |

| Implementation No. | | | 5-7 | 5-8 | 5-9 | 5-10 | 5-11 | 5-12 | 5-13 |
|---|---|---|---|---|---|---|---|---|---|
| | | | Present Invention Example | Present Invention Example | Present Invention Example | Present Invention Example | Present Invention Example | Present Invention Example | Present Invention Example |
| Coating material | Solvent | Type | Toluene | Toluene | Toluene | Toluene | Toluene | Toluene | Toluene |
| | | Content ratio (mass%) | 46.0 | 46.0 | 12.6 | 10.6 | 46.3 | 48.0 | 76.3 |
| | Dispersant | Type | Oleic acid | Oleic acid | Oleic acid | Oleic acid | Oleic acid | Oleic acid | Oleic acid |
| | | Number of carbon atoms n | 18 | 18 | 18 | 18 | 18 | 18 | 18 |
| | | Number of double bonds of carbon m | 1 | 1 | 1 | 1 | 1 | 1 | 1 |
| | | Content ratio (mass%) | 0.5 | 0.5 | 0.9 | 0.9 | 0.2 | 0.5 | 0.2 |
| | Electrically conductive powder | Type | Ag | Ag | Ag | Ag | Ag | Ag | Ag |
| | | Particle size (D50) (nm) | 55 | 55 | 55 | 500 | 55 | 55 | 500 |
| | | Content ratio (mass%) | 50 | 50 | 85 | 85 | 50 | 50 | 20 |
| | Resin | Type | Acrylic | Acrylic | Epoxy | Acrylic | Acrylic | Epoxy | Acrylic |
| | | Content ratio (mass%) | 3.5 | 3.5 | 1.5 | 3.5 | 3.5 | 1.5 | 3.5 |
| Thickness of electrically conductive layer ($\mu$m) | | | 7 | 48 | 10 | 50 | 45 | 5 | 48 |
| Contact electrical conductivity | Before accelerated deterioration test (m$\Omega \cdot$cm$^2$) | | 5 | 7 | 8 | 9 | 12 | 6 | 13 |
| | After accelerated deterioration test (m$\Omega \cdot$cm$^2$) | | 12 | 8 | 9 | 11 | 13 | 12 | 14 |
| | Determination | | B | A | A | B | B | B | B |
| | After load fatigue resistance test | | 5 | 8 | 8 | 10 | 12 | 6 | 13 |
| | Determination | | A | A | A | B | B | A | B |
| Adhesiveness | Determination | | A | A | A | A | A | A | A |

EP 3 082 185 A1

52

In Comparative Example in which the thickness of the electrically conductive layer is relatively small, specifically 3 $\mu$m (implementation number 5-1 in Table 10), it is highly likely that a microscopic defect like a pinhole will occur in the electrically conductive layer; and fluoride ions entered the defect and came into contact with the titanium base foil, and the titanium base foil was deteriorated; consequently, the contact electrical conductivity was worsened.

In Comparative Example in which the thickness of the electrically conductive layer is relatively large, specifically 60 $\mu$m (implementation number 5-6 in Table 10), a reduction in the electrical conductivity, which is presumed to be due to the non-uniformity of the dispersion of the silver particles in the electrically conductive layer, occurred, and the contact electrical conductivity was poor at the time before the accelerated deterioration test.

The results when the number of carbon atoms and the number of double bonds of carbon of the dispersant were changed are shown in Table 12 and Table 13 (continuation of Table 12).

[Table 12]

Table 12

| Implementation No. | | | | 6-1 | 6-2 | 6-3 | 6-4 | 6-5 | 6-6 | 6-7 |
|---|---|---|---|---|---|---|---|---|---|---|
| | | | | Comparative Example | Comparative Example | Comparative Example | Present Invention Example | Present Invention Example | Present Invention Example | Present Invention Example |
| Titanium foil | Base material | | | M01 | M01 | M01 | M01 | M01 | M01 | M01 |
| | Treatment | Pre-treatment | Surface treatment | P01 | P01 | P01 | P01 | P01 | P01 | P01 |
| | | | | H01 | H01 | H01 | H01 | H01 | H01 | H01 |
| | | | Treatment temperature (°C) | 70 | 70 | 70 | 70 | 70 | 70 | 70 |
| | | | Treatment time (min) | 30 | 30 | 30 | 30 | 30 | 30 | 30 |
| | | Heating treatment | | K01 | K01 | K01 | K01 | K01 | K01 | K01 |
| | | | Treatment temperature (°C) | 330 | 330 | 330 | 330 | 330 | 330 | 330 |
| | | | Treatment time (min) | 5 | 5 | 5 | 5 | 5 | 5 | 5 |
| | Thin-film XRD measurement | | $[I_{TiO}/(I_{Ti}+I_{TiO})]$ (%) | 6 | 6 | 6 | 6 | 6 | 6 | 6 |
| | Titanium surface roughness | | Rsm($\mu$m) | 4.4 | 4.5 | 4.5 | 4.3 | 4.4 | 4.8 | 4.2 |
| | | | Ra($\mu$m) | 0.49 | 0.48 | 0.45 | 0.46 | 0.5 | 0.48 | 0.47 |
| | Titanium foil contact resistance (m$\Omega\cdot$cm$^2$) | | | 5 | 5 | 5 | 5 | 5 | 5 | 5 |

| Implementation No. | | | 6-1 | 6-2 | 6-3 | 6-4 | 6-5 | 6-6 | 6-7 |
|---|---|---|---|---|---|---|---|---|---|
| | | | Comparative Example | Comparative Example | Comparative Example | Present Invention Example | Present Invention Example | Present Invention Example | Present Invention Example |
| Coating material | Solvent | Type | Toluene | Toluene | Toluene | Toluene | Toluene | Toluene | Toluene |
| | | Content ratio (mass%) | 46.0 | 46.0 | 46.0 | 46.0 | 46.0 | 46.0 | 46.0 |
| | Dispersant | Type | Dodecylbenzenesulfonic acid | Pelargonic acid | Behenic acid | Capric acid | Stearic acid | Arachidic acid | Oleic acid |
| | | Number of carbon atoms n | 18 | 9 | 22 | 10 | 18 | 20 | 18 |
| | | Number of double bonds of carbon m | 0 | 0 | 0 | 0 | 0 | 0 | 1 |
| | | Content ratio (mass%) | 0.5 | 0.5 | 0.5 | 0.5 | 0.5 | 0.5 | 0.5 |
| | Electrically conductive powder | Type | Ag | Ag | Ag | Ag | Ag | Ag | Ag |
| | | Particle size (D50) (nm) | 55 | 55 | 55 | 55 | 55 | 55 | 55 |
| | | Content ratio (mass%) | 50 | 50 | 50 | 50 | 50 | 50 | 50 |
| | Resin | Type | Acrylic | Acrylic | Acrylic | Acrylic | Acrylic | Acrylic | Acrylic |
| | | Content ratio (mass%) | 3.5 | 3.5 | 3.5 | 3.5 | 3.5 | 3.5 | 3.5 |
| Thickness of electrically conductive layer ($\mu$m) | | | 33 | 33 | 36 | 34 | 38 | 32 | 35 |
| Contact electrical conductivity | Before accelerated deterioration test ($m\Omega \cdot cm^2$) After accelerated deterioration test ($m\Omega \cdot cm^2$) Determination | | 21 25 C | 29 37 C | 17 19 C | 13 14 B | 4 5 A | 11 13 B | 3 4 A |
| | After load fatigue resistance test Determination | | - - | - - | - - | 13 B | 4 A | 12 B | 4 A |
| Adhesiveness | Determination | | - | - | - | A | A | A | A |

EP 3 082 185 A1

[Table 13]

Table 13

| Implementation No. | | | 6-8 | 6-9 | 6-10 | 6-11 | 6-12 | 6-13 | 6-14 | 6-15 |
|---|---|---|---|---|---|---|---|---|---|---|
| | | | Present Invention Example | Present Invention Example | Present Invention Example | Comparative Example | Present Invention Example | Present Invention Example | Present Invention Example | Present Invention Example |
| Titanium foil | Base material | | M02 | M02 | M03 | M03 | M04 | M05 | M06 | M07 |
| | Treatment | Pre-treatment | P01 | P01 | P02 | P02 | P01 | P01 | P02 | P02 |
| | | Surface treatment | H01 | H01 | H02 | H02 | H01 | H01 | H01 | H01 |
| | | Treatment temperature (°C) | 70 | 70 | 40 | 40 | 70 | 80 | 80 | 80 |
| | | Treatment time (min) | 30 | 30 | 15 | 15 | 30 | 40 | 40 | 40 |
| | | Heating treatment | K01 | K01 | K01 | K01 | K01 | K01 | K01 | K01 |
| | | Treatment temperature (°C) | 300 | 300 | 330 | 330 | 260 | 300 | 270 | 350 |
| | | Treatment time (min) | 5 | 5 | 5 | 5 | 5 | 5 | 5 | 5 |
| | Thin-film XRD measurement | $[I_{TiO}/I_{Ti}+I_{TiO}]$ (%) | 4.3 | 4.3 | 2.0 | 2.0 | 0.7 | 1.9 | 1.5 | 1.1 |
| | Titanium surface roughness | Rsm($\mu$m) | 4.3 | 4.6 | 3.8 | 3.7 | 4.5 | 4.4 | 4.6 | 4.3 |
| | | Ra($\mu$m) | 0.48 | 0.49 | 0.10 | 0.08 | 0.49 | 0.24 | 0.25 | 0.22 |
| | Titanium foil contact resistance (m$\Omega \cdot$cm$^2$) | | 6 | 6 | 6 | 6 | 9 | 6 | 6 | 7 |

EP 3 082 185 A1

| Implementation No. | | | 6-8 | 6-9 | 6-10 | 6-11 | 6-12 | 6-13 | 6-14 | 6-15 |
|---|---|---|---|---|---|---|---|---|---|---|
| | | | Present Invention Example | Present Invention Example | Present Invention Example | Comparative Example | Present Invention Example | Present Invention Example | Present Invention Example | Present Invention Example |
| Coating material | Solvent | Type | Toluene | | | Toluene | Toluene | Toluene | Toluene | Toluene | Toluene | Toluene |
| | | Content ratio (mass%) | 48.0 | 48.0 | 46.0 | 46.0 | 5.6 | 46.0 | 48.0 | 46.0 |
| | Dispersant | Type | Eicosenoic acid | Linolenic acid | Capric acid | Arachidonic acid | Stearic acid | Arachidic acid | Eicosenoic acid | Linolenic acid |
| | | Number of carbon atoms n | 20 | 18 | 10 | 20 | 18 | 20 | 20 | 18 |
| | | Number of double bonds of carbon m | 1 | 3 | 0 | 4 | 0 | 0 | 1 | 3 |
| | | Content ratio (mass%) | 0.5 | 0.5 | 0.5 | 0.5 | 0.9 | 0.5 | 0.5 | 0.5 |
| | Electrically conductive powder | Type | Ag | Ag | Ag | Ag | Ag | Ag | Ag | Ag |
| | | Particle size (D50) (nm) | 55 | 55 | 55 | 55 | 55 | 55 | 55 | 55 |
| | | Content ratio (mass%) | 50 | 50 | 50 | 50 | 90 | 50 | 50 | 50 |
| | Resin | Type | Epoxy | Epoxy | Acrylic | Acrylic | Acrylic | Acrylic | Epoxy | Epoxy |
| | | Content ratio (mass%) | 1.5 | 1.5 | 3.5 | 3.5 | 3.5 | 3.5 | 1.5 | 1.5 |
| Thickness of electrically conductive layer ($\mu$m) | | | 33 | 35 | 37 | 36 | 38 | 36 | 30 | 35 |

EP 3 082 185 A1

(continued)

| Implementation No. | | 6-8 | 6-9 | 6-10 | 6-11 | 6-12 | 6-13 | 6-14 | 6-15 |
|---|---|---|---|---|---|---|---|---|---|
| | | Present Invention Example | Present Invention Example | Present Invention Example | Comparative Example | Present Invention Example | Present Invention Example | Present Invention Example | Present Invention Example |
| Contact electrical conductivity | Before accelerated deterioration test ($m\Omega \cdot cm^2$) | 8 | 9 | 9 | 15 | 12 | 13 | 8 | 11 |
| | After accelerated deterioration test ($m\Omega \cdot cm^2$) | 10 | 12 | 14 | 21 | 14 | 14 | 9 | 13 |
| | Determination | B | B | B | C | B | B | A | B |
| | After load fatigue resistance test | 8 | 10 | 9 | - | 13 | 13 | 8 | 11 |
| | Determination | A | B | A | - | B | B | A | B |
| Adhesiveness | Determination | A | A | A | - | A | A | A | A |

Even when the number of carbon atoms and the number of double bonds of carbon are in the ranges of the present invention, in Comparative Example in which a resin containing a sulfonic acid compound is used (implementation number 6-1 in Table 12), the contact electrical conductivity is poor.

Further, in Comparative Example in which a resin containing pelargonic acid having 9 carbon atoms is used (implementation number 6-2 in Table 12), Comparative Example in which a resin containing behenic acid having 22 carbon atoms is used (implementation number 6-3 in Table 12), and Comparative Example in which a resin containing arachidonic acid having 20 carbon atoms and 4 double bonds of carbon is used (6-11 in Table 13), the contact electrical conductivity is poor.

In the case where a resin containing a carboxylic acid is used, in all of Present Invention Examples in which a saturated fatty acid or an unsaturated fatty acid having 10 to 20 carbon atoms and 0 to 3 double bonds of carbon of the carboxylic acid is used as the dispersant, good contact electrical conductivity has been obtained stably.

Industrial Applicability

As described above, according to the present invention, a composite metal foil for a fuel cell separator having good corrosion resistance to fluoride ions and low contact resistance, a fuel cell separator produced by processing the metal foil, a fuel cell using the fuel cell separator, and a method for producing a composite metal foil for a fuel cell separator can be provided. Thus, the present invention has high applicability in battery manufacturing industries.

**Claims**

1. A composite metal foil for a fuel cell separator in which a surface of a titanium foil or a titanium alloy foil is coated with an electrically conductive layer, wherein

    (i) an electrically conductive film in which TiO is dispersed in an oxide film and the TiO composition ratio $[I_{TiO}/(I_{Ti} + I_{TiO})]$ found from the maximum intensity of the diffraction peaks of TiO ($I_{TiO}$) and the maximum intensity of the diffraction peaks of metal titanium ($I_{Ti}$) out of the X-ray diffraction peaks of the surface of the titanium foil or the titanium alloy foil is 0.5% or more is formed on the surface of the titanium foil or the titanium alloy foil, and
    (ii) the electrically conductive layer consists of, in mass%,

    (ii-1) silver particles with an average particle size of not less than 10 nm and not more than 500 nm: 20% to 90%,
    (ii-2) a dispersant: 0.2% to 1.0%, and
    (ii-3) the balance: an acrylic resin or an epoxy resin, and
    (ii-4) has a thickness of 5 to 50 $\mu$m.

2. The composite metal foil for a fuel cell separator according to claim 1, wherein minute protrusions are densely distributed on the surface of the titanium foil or the titanium alloy foil and a surface roughness RSm of the surface is 0.5 to 5.0 $\mu$m.

3. The composite metal foil for a fuel cell separator according to claim 1 or 2, wherein a surface roughness Ra of the surface is 0.05 to 0.50 $\mu$m.

4. The composite metal foil for a fuel cell separator according to any one of claims 1 to 3, wherein the dispersant contains a carboxyl group.

5. The composite metal foil for a fuel cell separator according to claim 4, wherein the dispersant containing a carboxyl group is made of a fatty acid of at least one of Chemical Formulae (a) and (b) below,

    (a) a saturated fatty acid of $C_nH_{2n}O_2$ (the number of carbon atoms n: 10 to 20), and
    (b) an unsaturated fatty acid of $C_nH_{2(n-m)}O_2$ (the number of carbon atoms n: 10 to 20, the number of double bonds of carbon m: 1 to 3).

6. A method for producing the composite metal foil for a fuel cell separator according to any one of claims 1 to 5, the method comprising:

    (i) subjecting a titanium foil or a titanium alloy foil to an immersion treatment in which the titanium foil or the titanium alloy foil is immersed in a non-oxidizing acid or to cathodic electrolysis treatment, and then to heat treatment, and thereby forming, on a surface of the titanium foil or the titanium alloy foil, an electrically conductive film in which TiO is dispersed in an oxide film and the TiO composition ratio $[I_{TiO}/(I_{Ti}+I_{TiO})]$ found from the maximum intensity of the diffraction peaks of TiO ($I_{TiO}$) and the maximum intensity of the diffraction peaks of metal titanium ($I_{Ti}$) out of the X-ray diffraction peaks of the surface of the titanium foil or the titanium alloy foil is 0.5% or more; and subsequently

(ii) applying to the electrically conductive film an electrically conductive coating material consisting of, in mass%,

(ii-1) silver particles with an average particle size of not less than 10 nm and not more than 500 nm: 20% to 90%,
(ii-2) a dispersant: 0.2% to 1.0%, and
(ii-3) the balance: an acrylic resin or an epoxy resin, and performing drying, and
(ii-4) thereby forming an electrically conductive layer with a thickness of 5 to 50 $\mu$m.

7. The method for producing the composite metal foil for a fuel cell separator according to claim 6, wherein minute protrusions are densely distributed on the surface of the titanium foil or the titanium alloy foil and a surface roughness RSm of the surface is 0.5 to 5.0 $\mu$m.

8. The method for producing the composite metal foil for a fuel cell separator according to claim 6 or 7, wherein a surface roughness Ra of the surface is 0.05 to 0.50 $\mu$m.

9. The method for producing the composite metal foil for a fuel cell separator according to any one of claims 6 to 8, wherein the dispersant contains a carboxyl group.

10. The method for producing the composite metal foil for a fuel cell separator according to claim 9, wherein the dispersant containing a carboxyl group is made of a fatty acid of at least one of Chemical Formulae (a) and (b) below,

(a) a saturated fatty acid of $C_nH_2O_2$ (the number of carbon atoms n: 10 to 20), and
(b) an unsaturated fatty acid of $C_nH_{2(n-m)}O_2$ (the number of carbon atoms n: 10 to 20, the number of double bonds of carbon m: 1 to 3).

11. A fuel cell separator comprising the composite metal foil for a fuel cell separator according to any one of claims 1 to 5 as a base material.

12. A fuel cell comprising the fuel cell separator according to claim 11.

## INTERNATIONAL SEARCH REPORT

International application No.

PCT/JP2015/060489

### A. CLASSIFICATION OF SUBJECT MATTER
*H01M8/02*(2006.01)i, *H01M8/10*(2006.01)n

According to International Patent Classification (IPC) or to both national classification and IPC

### B. FIELDS SEARCHED

Minimum documentation searched (classification system followed by classification symbols)
H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2010/038544 A1 (Nippon Steel Corp.), 08 April 2010 (08.04.2010), claim 3; page 16, line 19 to page 17, line 1 & EP 2337135 A1 claim 3; paragraph [0041] | 1-12 |
| A | JP 2010-236083 A (Kobe Steel, Ltd.), 21 October 2010 (21.10.2010), claim 3; paragraphs [0001], [0026], [0027], [0047] & US 2010/0233587 A1 claim 1; paragraphs [0001], [0033] to [0035], [0064] to [0066] | 1-12 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 June 2015 (28.06.15) | Date of mailing of the international search report<br>07 July 2015 (07.07.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/060489

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-36314 A  (Kobe Steel, Ltd.), 10 February 2005 (10.02.2005), claim 1; paragraphs [0001], [0019], [0025] to [0027], [0043] to [0049]; fig. 1, 3 (Family: none) | 1-12 |
| A | JP 2008-176988 A  (Nippon Steel Corp.), 31 July 2008 (31.07.2008), claim 3; paragraphs [0038], [0039], [0049], [0050] (Family: none) | 1-12 |
| A | JP 2005-4998 A  (Toyota Motor Corp.), 06 January 2005 (06.01.2005), paragraphs [0015], [0018] (Family: none) | 1-12 |
| A | JP 2007-501500 A  (General Motors Corp.), 25 January 2007 (25.01.2007), claims 1, 10; paragraph [0027] & WO 2005/018032 A1 claims 1, 10; paragraph [0033] | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000328200 A
- JP 2004273370 A
- JP 2007131947 A
- JP 2007005084 A
- JP 2006140095 A
- JP 2007234244 A
- JP 2010097840 A
- JP 2010129458 A
- JP 2010248570 A
- JP 2010248572 A
- JP 2012028045 A
- JP 2012028046 A
- JP 2012043775 A
- JP 2012043776 A
- JP 2012028047 A
- JP 2011077018 A
- WO 2010038544 A
- WO 2011016465 A
- JP 2002343375 A
- JP 2005004998 A
- JP 2007157387 A
- JP 2005209399 A
- JP 2005056776 A
- JP 2005038823 A
- JP 2010108673 A
- JP 2009238560 A
- JP 2006156288 A
- JP 2010182558 A
- JP 2010140886 A
- JP 2006134640 A
- JP 2010027262 A
- JP 2010 A
- JP 140886 A

**Non-patent literature cited in the description**

- **G. LUTJERING ; J. ALBRECHT.** Ti-2003 Science and Technology. Wiley-VCH Verlag GmbH & Co, 2004, 3117-3124